# EUROPEAN PATENT APPLICATION

(11) **EP 4 600 808 A1**
(43) Date of publication of application: **13.08.2025**
(21) Application number: 22961691.7
(22) Date of filing: 11.10.2022
(51) Int. Cl.: G06F 8/38

(54) **PLAYBACK INTERFACE DISPLAY METHOD AND APPARATUS, DEVICE, AND READABLE STORAGE MEDIUM**

(71) Applicant: Guangzhou Kugou Computer Technology Co., Ltd., Guangzhou, Guangdong 510660 (CN)
(72) Inventor: SUN, Tianyuan, Guangzhou, Guangdong 510660 (CN); HUANG, Yichen, Guangzhou, Guangdong 510660 (CN); LIANG, Junwen, Guangzhou, Guangdong 510660 (CN); WANG, Zhijie, Guangzhou, Guangdong 510660 (CN); WU, Hongqi, Guangzhou, Guangdong 510660 (CN); DANG, Zhengjun, Guangzhou, Guangdong 510660 (CN); YANG, Yabin, Guangzhou, Guangdong 510660 (CN); CHEN, Zhouwei, Guangzhou, Guangdong 510660 (CN); LIU, Chunyu, Guangzhou, Guangdong 510660 (CN); ZHANG, Pu, Guangzhou, Guangdong 510660 (CN); HU, Zhouhua, Guangzhou, Guangdong 510660 (CN)
(74) Representative: Cabinet Beau de Loménie
(86) International application number: PCT/CN2022/124726
(87) International publication number: WO 2024/077498

(57) **Abstract**

Embodiments of the present application provide a playback interface display method and apparatus, a device, and a readable storage medium. The method comprises: displaying an audio playback interface, the audio playback interface comprising a two-dimensional cover image corresponding to target audio; and in response to switching the target audio to a playback state, displaying an animation where a two-dimensional optical disk element corresponding to the target audio slides out from the edge of the two-dimensional cover image in a first specified direction. According to the technical solution provided by the embodiments of the present application, in the process of playing back the target audio, an animation effect having a stronger visual effect is displayed on the audio playback interface, the interaction form between a user operation and interface display is enriched, the human-computer interaction efficiency is improved, and the expressiveness of the audio playback interface for the target audio is further enhanced.

## Description

### TECHNICAL FIELD

The present disclosure relates to the field of multimedia data processing, and in particular, relates to a method and apparatus for displaying a playback interface, and a device and a readable storage medium thereof.

### BACKGROUND

In multimedia playback applications, for example, a music application, a music display region and an operation region are generally displayed on a music playback interface during music playback.

In some practices, the music display region simply displays lyrics of the music being played back, related album images, or music-related music videos, and display information in the music display region changes accordingly in response to playback, pause, song skip, and other operations of a user on the operation region.

However, the music display region only simply displays music-related information in some practices, and thus human-computer interaction has a low efficiency.

### SUMMARY

Embodiments of the present disclosure provide a method and an apparatus for displaying a playback interface, and a device and a readable storage medium thereof, which can improve the efficiency of human-computer interaction in playing back an audio and a playback efficiency of audio playback.

In an aspect, a method for displaying a playback interface is provided. The method includes:
displaying an audio playback interface, wherein the audio playback interface includes a two-dimensional cover image corresponding to a target audio; and
displaying an animation in which a two-dimensional optical disc element corresponding to the target audio slides out from an edge of the two-dimensional cover image in a first designated direction in response to the target audio switching to a playback state.

In an aspect, an apparatus for displaying a playback interface is provided. The apparatus includes:
a displaying module, configured to display an audio playback interface, wherein the audio playback interface includes a two-dimensional cover image corresponding to a target audio; and
the displaying module, further configured to display an animation in which a two-dimensional optical disc element corresponding to the target audio slides out from an edge of the two-dimensional cover image in a first designated direction in response to the target audio switching to a playback state.

In an aspect, a computer device is provided. The computer device includes a processor, and a memory storing one or more programs, which when loaded and run by the processor, cause the processor to perform the method for displaying the playback interface described above.

In an aspect, a computer-readable storage medium is provided. The computer-readable storage medium stores one or more programs, which when loaded and run by a processor, cause the processor to perform the method for displaying the playback interface described above.

The technical solutions according to the embodiments of the present disclosure at least have the following technical effects.

By switching the target audio to the playback state, the display animation in which the two-dimensional optical disc element slides out from the two-dimensional cover image is simulated on the audio playback interface, such that the audio playback interface displays a stronger visualization animation effect during playback of the target audio, interaction forms between the user operation and interface display are enriched, the efficiency of human-computer interaction is improved, and the expressivity of the audio playback interface for the target audio is enhanced.

### BRIEF DESCRIPTION OF DRAWINGS

For a clearer description of the technical solutions according to the embodiments of the present disclosure, the following briefly describes the accompanying drawings required for describing the embodiments. Apparently, the accompanying drawings in the following description show merely some embodiments of the present disclosure, and those of ordinary skill in the art may still derive other drawings from these accompanying drawings without creative efforts.
FIG. 1 a schematic display diagram of an audio playback interface according to some embodiments of the present disclosure;
FIG. 2 is a flowchart of an application environment according to some embodiments of the present disclosure;
FIG. 3 is a flowchart of a method for displaying a playback interface according to some embodiments of the present disclosure;
FIG. 4 is a schematic diagram of an animation display interface of a playback interface according to some embodiments of the present disclosure;
FIG. 5 is a flowchart of a method for displaying a playback interface according to some embodiments of the present disclosure;
FIG. 6 is a schematic diagram of an animation display interface of a playback interface according to some embodiments of the present disclosure;
FIG. 7 is a flowchart of a method for displaying a playback interface according to some embodiments of the present disclosure;
FIG. 8 is a schematic display diagram of a two-dimensional optical disc element according to some embodiments of the present disclosure;
FIG. 9 is a schematic display diagram of a two-dimensional optical disc element according to some embodiments of the present disclosure;
FIG. 10 is a schematic display diagram of a spectrum animation according to some embodiments of the present disclosure;
FIG. 11 is a schematic display diagram of a scale animation of a background according to some embodiments of the present disclosure;
FIG. 12 is a schematic diagram of a dissipation animation of text content data according to some embodiments of the present disclosure;
FIG. 13 is a schematic diagram of an animation display interface of a playback interface according to some embodiments of the present disclosure;
FIG. 14 is a schematic structural diagram of an apparatus for displaying a playback interface according to some embodiments of the present disclosure;
FIG. 15 is a schematic structural diagram of an apparatus for displaying a playback interface according to some embodiments of the present disclosure; and
FIG. 16 is a schematic block diagram of a terminal according to some embodiments of the present disclosure.

### DETAILED DESCRIPTION

For clearer understanding of the objects, technical solutions, and advantages of the present disclosure, some embodiments of the present disclosure are described in detail hereinafter in conjunction with the accompanying drawings.

The terms involved in the embodiments of the present disclosure are simply described first.

The target audio is used to represent a to-be-played-back audio work, and is an online audio or a local audio. In a case where the target audio is practiced as the online audio, the target audio is an audio work in an audio playback application. The user plays back the target audio in the audio playback application. The specific implementation logic is that the terminal parses an audio data packet corresponding to the target audio from the server, and plays back the target audio; and in a case where the target audio is implemented as a local audio, the terminal reads and plays back the target audio from a local disk.

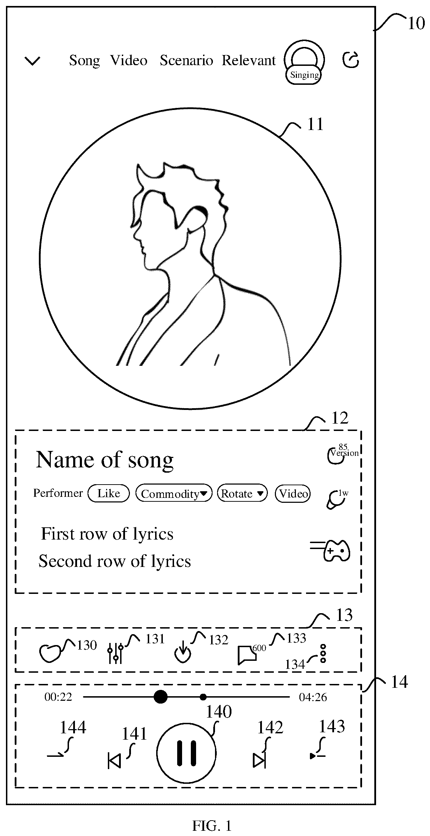

The audio playback interface is an interface corresponding to an audio playback application in playing back the target audio. As shown in FIG. 1, the audio playback interface 10 includes a two-dimensional cover image 11, an audio information display region 12, a first audio operation region 13, and a second audio operation region 14. The two-dimensional cover image 11 is used to display image information associated with the target audio. The audio information display region 12 is used to display specific audio information of the target audio, which includes, but is not limited to, a performer of the target audio, a composer of the target audio, an arranger of the target audio, a name of the work of the target audio, a playback quality corresponding to an audio that is being played back, text content data corresponding to the audio that is being played back, and the like. The first audio operation region 13 shows corresponding operation controls for favoriting, commenting on, downloading, and adjusting the target audio. For example, a favorites control 130 is used to add the target audio to a target audio list, and a sound quality adjust control 131 is used to adjust an audio quality of a target audio that is being played back and adjust at least one of audio effects of the target audio that is being played back. For example, the sound quality adjust control 131 is used to adjust the audio quality from a standard quality to a high quality (HQ), from the HQ to a super quality (SQ), and the like; and the sound quality adjust control 131 is used to adjust the audio effect from a "surround sound" effect to a "3D sound" effect or the like. The download control 132 is used to locally store the audio that is being played back on the terminal. The comment control 133 is used to evaluate the audio that is being played back. Other function controls 134 are used to display other operations on the audio that is being played back, for example, a share operation, an operation of adding to a predetermined audio list, a speed-up playback operation, an operation of setting playback ringtones, and the like. The second audio operation region 14 displays a playback control 140 that adjusts a playback state of the target audio, a first switch sub-control 141 and a second switch sub-control 142 that are used to switch the audio that is being played back, a list control 143 that displays a list of audios being played back, and a cycle control 144 that adjusts playback cycle modes of all audios in the list of audios being played back. It should be noted that FIG. 1 is only an illustrative example of the audio playback interface. The audio playback interface may further include regions, controls, elements, and the like other than the above mentioned regions, controls, elements, and the like, and may display fewer regions, controls, elements, and the like, which is not limited in the present disclosure.

The two-dimensional cover image is an element region used to display image information associated with the audio that is being played back, and the image information includes, but is not limited to, a cover image corresponding to an album including the audio that is being played back, a photo corresponding to a performer of the audio that is being played back, a story image corresponding to a film and television work of the audio that is being played back, a single pure color image, a variety of pure color gradient images, a text design image corresponding to the name of the work of the audio that is being played back, and an image uploaded by the user.

The two-dimensional optical disc element is used to indicate a playback state corresponding to the audio that is being played back. The two-dimensional optical disc element includes a display state and a non-display state. The two-dimensional optical disc element changes the state with the change of the playback state of the target audio. The specific process of the state change is as follows. After the playback operation is performed on the target audio, the two-dimensional optical disc element changes from the non-display state to the display state; in the process of playing back the target audio, the two-dimensional optical disc element is always in the display state; and in a case where the target audio is in the display state, a playback switch operation is performed, and the two-dimensional optical disc element is switched from the display state to the non-display state. In some embodiments, the display state of the two-dimensional optical disc element also includes a rotating sub-state and a stationary sub-state, the rotating sub-state is used to indicate that the target audio is in a playback state, and the stationary sub-state is used to indicate that the target audio is in a temporary pause state. The above are only illustrative examples, and the two-dimensional optical disc element may also be in other states and have state changes, which are not limited in the present disclosure.

In some practices, referring to FIG. 1, only the audio cover 11 corresponding to the audio that is being played back is displayed in the audio playback interface 10, and a shape of the audio cover 11 is changed. For example, a "round" audio cover in FIG. 1 is changed to a "square" audio cover. In the process of playing back the audio, the audio cover 11 is in a stationary and fixed state, and interaction effective to the audio playback cannot be adaptively changed with the rhythm of the target audio. It can be seen that the interface interaction efficiency of the audio playback interface is low, such that the appeal of the audio playback interface to the user is reduced to some extent, and the utilization rate of the audio playback application is ultimately reduced.

Based on above defects, embodiments of the present disclosure provide a method for displaying a playback interface. A new player style is set in the audio playback interface corresponding to the audio playback application. The audio playback interface displays the two-dimensional cover image to simulate pull-out of the optical disc from an optical disc cartridge in a case where the playback operation, the pause operation, or the playback switch operation is performed on the target audio in actual scenarios. Specifically, in a case where the playback operation is performed on the target audio, an animation in which a two-dimensional optical disc corresponding to the target audio is pulled out from a two-dimensional cover image is played back, such that the interface interaction efficiency of the audio playback interface is improved, the appeal of the audio playback interface to the user is enhanced, and the utilization rate of the audio playback application is further improved.

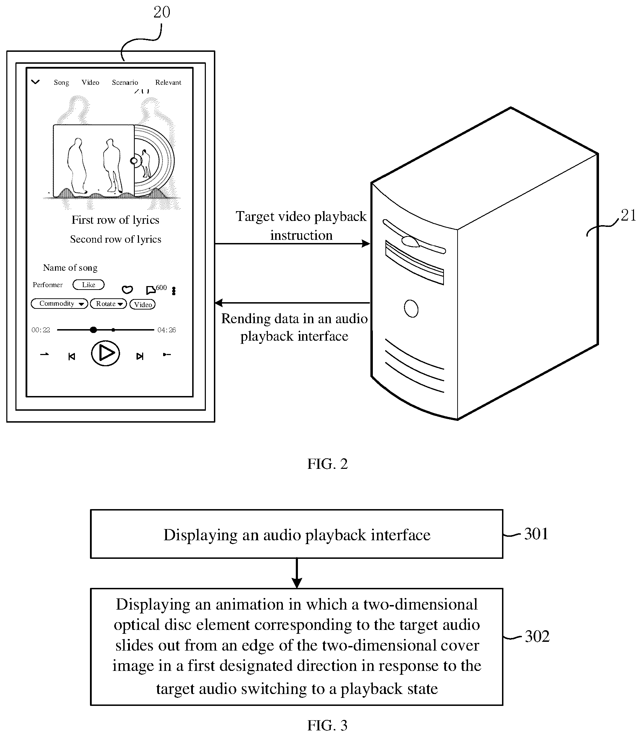

Referring to FIG. 2, FIG. 2 is a schematic diagram of an application environment according to some embodiments of the present disclosure. The application environment involves a terminal 20 and a server 21.

The terminal 20 has an audio playback function. In some embodiments, an audio playback application that supports the audio playback function is installed/runnable in the terminal. The audio playback application is any of a traditional application, a cloud application, a small program or an application module in a host application (for example, a fast application) , or a web platform, which is not limited in the embodiments of the present disclosure. The user plays back the target audio over the audio playback application on the terminal 20.

The terminal 20 also has a function of data interaction with the server 21. For example, in the process of playing back the target audio, the terminal 20 transmits a target audio playback request to the server 21, the server 21 transmits the audio data packet corresponding to the target audio and rendering data of the audio playback interface to the terminal 20 based on the playback request, and the terminal 20 parses data in the audio data packet to play back the target audio and parses the rendering data of the audio playback interface to display a display animation in which the two-dimensional optical disc element corresponding to the target audio slides out from the edge of the two-dimensional cover image in the audio playback interface of the terminal 20.

In some embodiments, the rendering data of the audio playback interface is offline data. That is, the terminal 20 directly reads the locally stored rendering data of the audio playback interface to render and display the animation in the audio playback interface.

The server 21 also has the function of acquiring audio data. Audio data information corresponding to the playback request is acquired from a database based on the function of acquiring the audio data and the rendering data of the audio playback interface, and the audio data package is acquired by compressing the audio data information. The audio data packet includes, but is not limited to, at least one of the audio data of the target audio, the image information associated with the target audio, or introduction information corresponding to the target audio.

Communication connection is established between the terminal 20 and the server 21 over a wired or wireless network. The wireless or wired networks adopts standard communication technologies and/or protocols. The network is usually an Internet, but may also be any other network, including but not limited to the local area network (LAN), a metropolitan area network (MAN), a wide area network (WAN), and any combination of the mobile, wired or wireless networks, private networks, and virtual private networks. In some embodiments, technologies and/or formats including the hypertext mark-up language (HTML), the extensible markup language (XML), and the like are used to indicate data exchanged over the network. In addition, all or some links are encrypted using the secure socket layer (SSL), the transport layer security (TLS), the virtual private network (VPN), the internet protocol security (IPsec), and other conventional encryption techniques. In other embodiments, custom and/or specialized data communication technologies may also be used to replace or supplement above data communication technologies.

It should be noted that the terminal 20 is a smartphone, a tablet, a moving picture experts group audio layer III player (MP3), a moving picture experts group audio layer IV player (MP4), a laptop, or a desktop computer. The terminal may also be referred to as a user equipment, a portable terminal, a laptop terminal, a desktop terminal, or the like, which is not limited in the present disclosure.

The server 21 is an independent physical server, a server cluster or a distributed system composed of several physical server, or a cloud server that provides cloud services, cloud databases, cloud computing, cloud-based functions, cloud storage, network services, cloud communications, middleware services, domain name services, security services, content delivery network (CDN), big data, Artificial Intelligence (AI) platforms, and other basic cloud computing services. In some embodiments, the server 21 is implemented as a node in a blockchain system.

It should be noted that information (including but not limited to user equipment information, user personal information, and the like), data (including but not limited to data for analysis, stored data, displayed data, and the like), and signals in the present disclosure are authorized by the users or fully authorized by the parties. The acquisition, use, and processing of relevant data shall comply with the relevant laws, regulations, and standards of the relevant countries and regions. For example, the two-dimensional cover image and the two-dimensional optical disc element in the present disclosure are fully authorized.

In conjunction with the introduction of the terms and the description of the application environment, the following embodiments describe in detail interface changes of the audio playback interface in a case where the target audio is switched to the playback state. Referring to FIG. 3, FIG. 3 is a flowchart of a method for displaying a playback interface according to some embodiments of the present disclosure. The method is applicable to the terminal shown in embodiments of FIG. 2. The method includes the following processes.

In S301, an audio playback interface is displayed.

The audio playback interface includes a two-dimensional cover image, and the two-dimensional cover image displays image information associated with a target audio. In a case where the target audio is not in a playback state, the two-dimensional cover image only displays a two-dimensional cover housing; and in a case where the target audio is in the playback state, the two-dimensional cover image further displays a two-dimensional optical disc element corresponding to the target audio.

In some embodiments, the audio playback interface includes at least one of a text display region, a first audio operation region, or a second audio operation region.

Functions of various regions in the audio playback interface are described hereinafter.

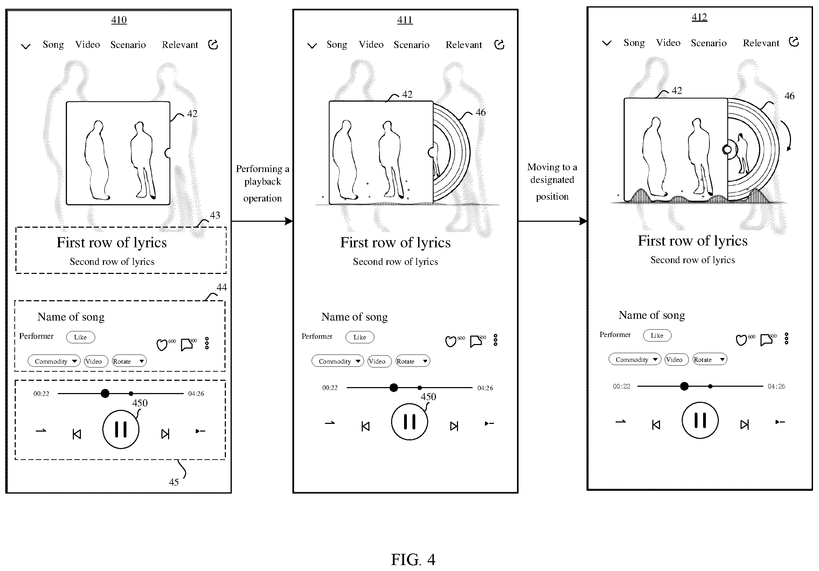

Reference may be made to the diagram of the interface shown in the audio playback interface 410 in FIG. 4.

As shown in the audio playback interface 410 in FIG. 4, the audio playback interface 410 includes a two-dimensional cover image 42, a text display region 43, a first audio operation region 44, and a second audio operation region 45.

The two-dimensional cover image 42 is used to display the image information associated with the target audio.

The text display region 43 is used to display text data associated with the target audio. For example, in a case where the target audio is a song "xxx," the text display region 43 displays lyrics corresponding to the song "xxx;" and in a case where the target audio is a segment of a film and television work "xx," the text display region 43 displays original lines corresponding to the film and television work "xx."

The first audio operation region 44 displays a favorites control, a comment control, an audio name select control, an audio author information view control, an audio playback quality control, and an additional operation integration control. Controls, for example, an audio effect switch control, a download control, and the like corresponding to other operations on the target audio are integrated in the additional operation control. For example, the favorites control is used to add the target audio into the target audio playlist, a corresponding list of "I like" is seen in actual implementation, and the list is a list created by the audio application based on the favorites control; the comment control is used to instruct to comment on the target audio, and the comment posted by the user is displayed in the comment display region; the audio name select control is used to instruct research using the name of the target audio, and the user selects different versions of target audios in the search result interface for playback; the audio author information view control is used to search the audio author of the target audio, the user selects other audio works of the audio author in the search result interface for playback, and the audio author is a singing author, an arranger author, a composer author, a name of a film and television work, and the like; and the audio playback quality control is used to instruct to switch the playback quality of the target audio, for example, switch from the HQ quality to the SQ quality.

The second audio operation region 45 displays controls for adjusting the playback state of the target audio, which includes, but is not limited to a playback control 450, an audio switch control, an audio cycle set control, a list control, and a progress bar display region. The playback control 450 is used to indicate whether the target audio is adjusted to be in the playback state or in the pause state; the audio switch control is used to instruct to switch the target audio that is being played back; the audio cycle set control is used to instruct to set the playback mode of the target audio, and he playback mode includes at least one of a single audio cycle playback, a list cycle playback, and an audio random playback; the list control is used to instruct to display audio information of a list of the target audio; and the progress bar display region is used to indicate a playback progress of the target audio.

In the embodiment, the two-dimensional cover image is used to indicate the image information associated with the audio that is being played back or is being to-be-played-back, and the audio that is being played back or is being to-be-played-back is referred to as the target audio hereinafter. The image information includes, but is not limited to the following information.

The image information is implemented as the audio cover image corresponding to the target audio, and the audio cover image is usually set by a production team of the target audio. In a case where the production team uploads the target audio, the production team sets the corresponding cover image for the target audio to display the cover image in the playback process of the target.

The image information is implemented as the album cover image corresponding to the album of the target audio. In the field of audio playback, the production team posts the audio works in the form of an audio collection, and the audio collection is called as an album. The album contains at least one audio work, a plurality of audio works in the album have their own corresponding audio cover information, and an album cover image different from the audio cover information is set for the album. In a case where the target audio is played back, the album information corresponding to the target audio is acquired, and the album cover image in the album information is determined as the image displayed in the two-dimensional cover image for display.

The image information is implemented as story images or theater images corresponding to the film and television work of the target audio, and the target audio is an episode or an original sound segment of the film and television work. For such target audio, the story image corresponding to the film and television work or at least one image in the story images is displayed. The story image is an audiovisual cover image of the film and television work.

The image information is implemented as a custom cover image uploaded and set by the user. In a case where the target audio is played back, the user customizes the image displayed in the two-dimensional cover image. The customization operation includes any one of selecting a pure color/gradient background from an existing color library, uploading a designated image locally, and selecting a popular image available online from the audio playback application.

In the embodiments, the two-dimensional cover image includes at least two pieces of image information. The image information is implemented as any of above pieces of image information. In a case where the two-dimensional cover image includes at least two pieces of image information, the trigger operation on the two-dimensional cover image is received to switch to display images in the at least two pieces of image information. The trigger operation is at least one of a tap operation, a hover slide operation, a slide operation, a double-tap operation, a tri-finger operation, which is not limited in the present disclosure.

In conjunction with above introduction to the image information, the following describes the display scenarios of the audio playback interface. An unuse scenario includes a scenario before entering the audio playback application for the first time and a scenario of entering the audio playback application for the first time without playing back any audio, and a use scenario is used to indicate that audio has been played using the audio playback application.

In the first type, the audio playback application is in the unuse scenario, that is, in a scenario where the audio playback application is opened for the first time, and no audio playback operation is performed, the audio playback interface does not have any audio-related information and only displays an original template, and an original state of all controls in the interface is displayed. For example, no image information is displayed in the two-dimensional cover image;

In the second type, the audio playback application is in the use scenario, that is, the audio playback interface displays audio information corresponding to a last song played back in last opening of the audio playback application after the audio playback application is opened. For example, in a case where the last audio played back in the last opening of the audio playback application is "sss," the two-dimensional cover image in the audio playback interface of the user displays graphical information associated with the audio "sss."

In S302, an animation in which a two-dimensional optical disc element corresponding to the target audio slides out from an edge of the two-dimensional cover image in a first designated direction is displayed in response to the target audio switching to a playback state.

In the embodiments of the present disclosure, the whole process of playing back the optical disc in real life is simulated, and the process is displayed in the audio playback interface in a visual form. That is, the two-dimensional cover image in the embodiments of the present disclosure is equivalent to a housing of an optical disc cartridge. In a case where the target audio is not played back, only the housing of the optical disc cartridge is displayed, that is, only the two-dimensional cover image is displayed in the audio playback interface; then, in the process of playing back the target audio, an animation in which the optical disc is fetched from the optical disc cartridge is displayed in the audio playback interface in a visual form, that is, the two-dimensional optical disc element corresponding to the target audio is removed from the two-dimensional cover image, and the two-dimensional optical disc element is rotated after the two-dimensional optical disc element moves to a designated position.

In the embodiments of the present disclosure, the following details the process in which the two-dimensional optical disc element slides out from the two-dimensional cover image in a case where the target audio is switched to the playback state.

In some embodiments, the display animation in which the two-dimensional optical disc element corresponding to the target audio slides out from the edge of the two-dimensional cover image in the first designated direction is displayed in response to the target audio switching to a playback state; and slide-out of the two-dimensional optical disc element is stopped in response to the two-dimensional optical disc element sliding to a designated position, and a rotation animation of the two-dimensional optical disc element is displayed. The slide-out display animation is used to indicate a corresponding moving animation in which the two-dimensional optical disc element switches from the occlusion state to the display state.

In some embodiments, in a case where the object moves in real life, the object does not move at a constant speed due to a friction force, and thus the influence factor of the friction force is introduced in setting the slide-out display animation of the two-dimensional optical disc element. The speed should be increased or decreased with a certain acceleration at the beginning period and the end period of movement of the two-dimensional optical disc elements. In setting the slide-out display animation of the two-dimensional optical disc element, the two-dimensional optical disc element moves at a movement speed corresponding to a variable speed curve. Alternatively, the friction force between the two-dimensional cover image and the two-dimensional optical disc element is ignored, and the two-dimensional optical disc element moves at a constant speed. The movement speed of the two-dimensional optical disc element is not limited in the present disclosure. That is, the display animation in which the two-dimensional optical disc element slides out from the edge of the two-dimensional cover image in a predetermined speed curve is displayed in response to the target audio switching to the playback state, and the predetermined speed curve includes a constant variable speed curve or a variable speed curve.

In some embodiments, the following details the specific movement process of the two-dimensional optical disc element.

The two-dimensional cover image is an image of any shape, for example, a circle, a square, a triangle, and the like. The embodiments of the present disclosure are illustrated using an example where the two-dimensional cover image is a square. The two-dimensional cover image includes four edges, that is, an upper edge, a lower edge, a left edge, and a right edge.

The two-dimensional optical disc element is in any shape, but is generally set as a circle or n-side line to achieve a better display effect of the two-dimensional optical disc element in playing back the rotation animation, and n is an integer greater than 4. The embodiments of the present disclosure are illustrated using an example where the two-dimensional cover image is a circle. A diameter of the two-dimensional optical disc element is less than a side length of the two-dimensional cover image to achieve a greater simulation effect of pull-out of the two-dimensional optical disc element from the two-dimensional cover image.

The cases of pull-out of the two-dimensional optical disc element from the two-dimensional cover image include, buts are not limited to the following cases.

In a first case, a display animation in which the two-dimensional optical disc element slides out from the upper edge of the two-dimensional cover image is displayed in response to the target audio switching to the playback state. In this case, the first designated direction instructs the two-dimensional optical disc element to move upwards.

In a second case, a display animation in which the two-dimensional optical disc element slides out from the left edge of the two-dimensional cover image is displayed in response to the target audio switching to the playback state. In this case, the first designated direction instructs the two-dimensional optical disc element to move leftwards.

In a third case, a display animation in which the two-dimensional optical disc element slides out from the lower edge of the two-dimensional cover image is displayed in response to the target audio switching to the playback state. In this case, the first designated direction instructs the two-dimensional optical disc element to move downwards.

In a fourth case, a display animation in which the two-dimensional optical disc element slides out from the right edge of the two-dimensional cover image is displayed in response to the target audio switching to the playback state. In this case, the first designated direction instructs the two-dimensional optical disc element to move rightwards.

In some embodiments, the slide-out of the two-dimensional optical disc element is stopped in response to a center of circle of the two-dimensional optical disc element coinciding with the edge of the two-dimensional cover image, and the rotation animation of the two-dimensional optical disc element is displayed. The rotation animation is used to indicate that the target audio is in the playback state. For example, the slide-out of the two-dimensional optical disc element is stopped in response to the center of circle of the two-dimensional optical disc element coinciding with any one of the upper edge, the lower edge, the left edge, and the right edge of the two-dimensional cover image.

Alternatively, the slide-out of the two-dimensional optical disc element is stopped in response to the two-dimensional optical disc element sliding to a position tangential to the edge of the two-dimensional cover image, and the rotation animation of the two-dimensional optical disc element is displayed.

Alternatively, the slide-out of the two-dimensional optical disc element is stopped in response to the two-dimensional optical disc element moving a custom distance from the edge of the two-dimensional cover image, and the rotation animation of the two-dimensional optical disc element is displayed. The custom distance indicates a distance that is customed by the used. For example, the user set the slide-out distance of the two-dimensional optical disc element in the set interface of the audio playback application.

In some embodiments, in displaying the rotation animation of the two-dimensional optical disc element, the two-dimensional optical disc element rotates clockwise or counterclockwise with the center of circle of the two-dimensional optical disc element as the axis according to a first designated speed corresponding to a normal playback speed of the target audio. In the embodiments of the present disclosure, the normal playback speed is a 1x playback speed.

In response to the playback state of the target audio, a playback speed adjust operation that adjusts a current playback speed of the target audio is received, the target audio is played back based on the adjusted target playback speed, and a rotation speed of the two-dimensional optical disc element is adjusted from the first designated speed to a second designated speed. The specific process of adjusting the playback speed of the target audio includes the following cases.

In a first case, in a case where the current playback speed of the target audio is slower than a target playback speed, playback of the target audio is accelerated. That is, the first designated speed is less than the second designated speed, that is, the rotation speed of the two-dimensional optical disc element after adjustment of the playback speed is greater than the rotation speed of the two-dimensional optical disc element before adjustment.

In a second case, in a case where the current playback speed of the target audio is greater than a target playback speed, playback of the target audio is decelerated. That is, the first designated speed is greater than the second designated speed, that is, the rotation speed of the two-dimensional optical disc element after adjustment of the playback speed is slower than the rotation speed of the two-dimensional optical disc element before adjustment.

For details, reference may be made to FIG. 4, FIG. 4 is a schematic diagram of interface change of an audio playback interface in playing back a target audio according to some embodiments of the present disclosure.

In a case where the target audio is not played back, the audio playback interface 410 in FIG. 4 only displays the two-dimensional cover image 42 corresponding to the target audio in a designated region of the audio playback interface 410, and the two-dimensional cover image 42 displays image information related to the target audio. In this case, the playback control 450 in the second operation region is in a first display state. The display animation in which the two-dimensional optical disc element 46 corresponding to the target audio slides out from the right edge of the two-dimensional cover image 42 according to the variable speed curve is displayed in response to the playback operation on the target audio in a case where the target audio is played back. The schematic diagram corresponding to the audio playback interface 411 in FIG. 4 is a frame of image in the playback process when the two-dimensional optical disc element 46 plays back the slide-out display animation and does not reach the designated position; in a case where the two-dimensional optical disc element 46 moves to the designated position, as shown in the audio playback interface 412 in FIG. 4, the center of circle of the two-dimensional optical disc element 46 coincides with the right edge of two-dimensional cover image 42, movement of the two-dimensional optical disc element 46 is stopped, and the rotation animation corresponding to rotation of the two-dimensional optical disc element 46 clockwise at the first designated speed is played back.

In summary, by switching the target audio to the playback state, the display animation in which the two-dimensional optical disc element slides out from the two-dimensional cover image is simulated on the audio playback interface, such that the audio playback interface displays a stronger visualization animation effect during playback of the target audio, interaction forms between the user operation and interface display are enriched, and the efficiency of human-computer interaction is improved.

In the method according to the embodiments of the present disclosure, at least two display methods of a slide-out animation (that is, a constant speed slide-out animation and a variable speed slide-out animation) are provided in displaying the slide-out animation of the two-dimensional optical disc element, such that the display form of the two-dimensional optical disc element is further enriched.

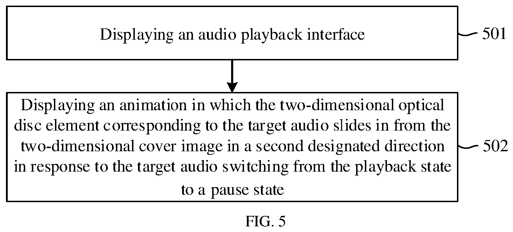

Interface change of the audio playback interface in switching the target audio to the pause state is described in detail in following embodiments. Referring to FIG. 5, FIG. 5 is a flowchart of a method for displaying a playback interface according to some embodiments of the present disclosure. The method is applicable to the terminal shown in embodiments of FIG. 2. The method includes the following processes.

In S501, an audio playback interface is displayed.

In some embodiments, for description of various regions and controls in the regions displayed in the audio playback interface in a case where the target audio is in the playback state, reference may be made to S301, which is not repeated again herein.

In S502, an animation in which the two-dimensional optical disc element corresponding to the target audio slides in from the two-dimensional cover image in a second designated direction is displayed in response to the target audio switching from the playback state to a pause state.

In some embodiments, playback of the target audio is stopped in response to a trigger operation on a playback control in the audio playback interface, and a display animation in which the two-dimensional optical disc element corresponding to the target audio slides in from the edge of the two-dimensional cover image in the second designated direction is displayed. The second designated direction and the first designated direction are two opposite and different designated directions. In conjunction with four cases where the two-dimensional optical disc element slides out from the two-dimensional cover image in S301, four corresponding cases where the two-dimensional optical disc element corresponding to the target audio slides in the two-dimensional cover image are present in S502.

In a first case, the two-dimensional optical disc element corresponding to the target audio slides out upwards from the upper edge of the two-dimensional cover image in switching the target audio to the playback state. Accordingly, playback of a rotation animation of the two-dimensional optical disc element corresponding to the target audio is stopped in response to the target audio switching to the pause state, and a display animation in which the two-dimensional optical disc element slides in downwards from the upper edge of the two-dimensional cover image is displayed until the two-dimensional optical disc element corresponding to the target audio completely coincides with the two-dimensional cover image.

In a second case, the two-dimensional optical disc element corresponding to the target audio slides out leftwards from the left edge of the two-dimensional cover image in switching the target audio to the playback state. Accordingly, playback of a rotation animation of the two-dimensional optical disc element corresponding to the target audio is stopped in response to the target audio switching to the pause state, and a display animation in which the two-dimensional optical disc element slides in rightwards from the left edge of the two-dimensional cover image is displayed until the two-dimensional optical disc element corresponding to the target audio completely coincides with the two-dimensional cover image.

In a third case, the two-dimensional optical disc element corresponding to the target audio slides out downwards from the lower edge of the two-dimensional cover image in switching the target audio to the playback state. Accordingly, playback of a rotation animation of the two-dimensional optical disc element corresponding to the target audio is stopped in response to the target audio switching to the pause state, and a display animation in which the two-dimensional optical disc element slides in upwards from the lower edge of the two-dimensional cover image is displayed until the two-dimensional optical disc element corresponding to the target audio completely coincides with the two-dimensional cover image.

In a fourth case, the two-dimensional optical disc element corresponding to the target audio slides out rightwards from the right edge of the two-dimensional cover image in switching the target audio to the playback state. Accordingly, playback of a rotation animation of the two-dimensional optical disc element corresponding to the target audio is stopped in response to the target audio switching to the pause state, and a display animation in which the two-dimensional optical disc element slides in leftwards from the right edge of the two-dimensional cover image is displayed until the two-dimensional optical disc element corresponding to the target audio completely coincides with the two-dimensional cover image.

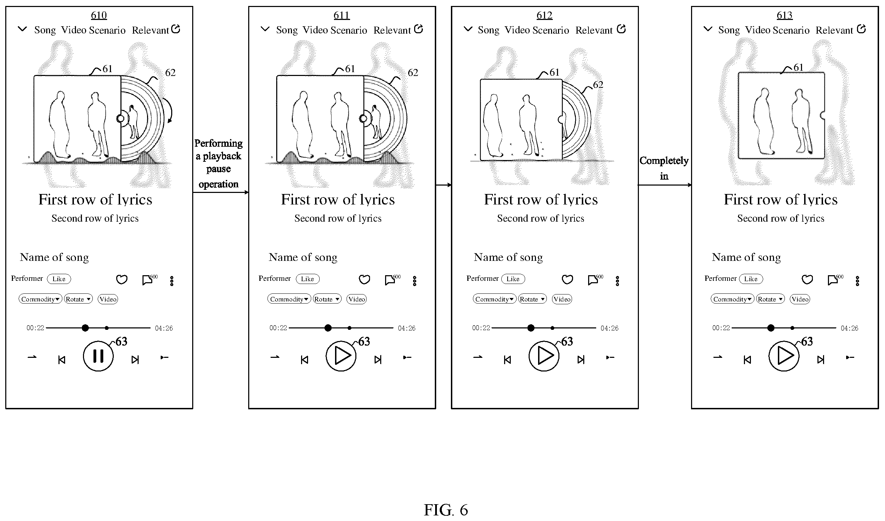

For details, reference may be made to FIG. 6, FIG. 6 is a schematic diagram of interface change of an audio playback interface in performing a pause operation on a target audio according to some embodiments of the present disclosure.

As shown in the audio playback interface 610 in FIG. 6, the target audio is in the playback state, and the two-dimensional optical disc element 62 corresponding to the target audio is rotated clockwise; as shown in the audio playback interface 611 in FIG. 6, playback of the target audio and the rotation animation of the two-dimensional optical disc element 62 are stopped (the display state/form/pattern of the playback control 63 changes accordingly) in response to a playback pause operation, the display animation in which the two-dimensional optical disc element 62 slides in leftwards from the right edge of the two-dimensional cover image 61 is displayed, and the audio playback interface 612 is a schematic diagram of an interface in a frame in the slide-in display animation. As shown in the audio playback interface 613 in FIG. 6, after the slide-in display animation of the two-dimensional optical disc element 62 is played back, the two-dimensional optical disc element 62 is completely accommodated in the two-dimensional cover image 61, and the audio playback interface only displays the two-dimensional cover image 61.

In some embodiments, the target audio is switched from the playback state to the pause state by the following modes.

In a first mode, in the playback state of the target audio, the trigger operation on the two-dimensional optical disc element corresponding to the target audio is received, playback of the rotation animation of the two-dimensional optical disc element is stopped, and playback of the target audio is stopped. For example, as shown in FIG. 6, the two-dimensional optical disc element 62 in the rotation state is tapped to automatically switch the display state of the playback control in the audio playback interface 610, such that the playback state of the target audio is adjusted. That is, the target audio is adjusted from the playback state to the pause state.

In a second mode, in the playback state of the target audio, the trigger operation on the playback control is received, playback of the rotation animation of the two-dimensional optical disc element is stopped, and playback of the target audio is stopped. For example, as shown in FIG. 6, in the playback process of the target audio, the playback control 63 in the audio playback interface 610 is tapped to automatically play back/display the rotation animation of the two-dimensional optical disc element 62, such that the playback state of the target audio is adjusted. That is, the target audio is adjusted from the playback state to the pause state.

In a third mode, in the playback state of the target audio, a pause playback voice instruction is received, playback of the rotation animation of the two-dimensional optical disc element is stopped, and playback of the target audio is stopped in response to the a pause playback voice instruction (to automatically switch the display state of the playback control in the audio playback interface 610).

The trigger operation in the first mode and the second mode is implemented as at least one of a tap operation, a double-tap operation, a hover point touch operation, which is not limited in the present disclosure.

The modes are illustrative examples, and the target audio may be switched from the playback state to the pause state by other modes.

In summary, by switching the target audio to the playback state, the display animation in which the two-dimensional optical disc element slides out from the two-dimensional cover image is simulated on the audio playback interface, such that the audio playback interface displays a stronger visualization animation effect during playback of the target audio, interaction forms between the user operation and interface display are enriched, and the efficiency of human-computer interaction is improved.

In the method according to the embodiments of the present disclosure, the target audio may be switched from the playback state to the pause state, the accommodation action of accommodating the optical disc to the optical disc cartridge is simulated, and the optical disc is displayed in the audio playback interface in a visual form, such that the audio playback interface displays a stronger visualization animation effect during playback of the target audio, interaction forms between the user operation and interface display are enriched, and the efficiency of human-computer interaction is improved.

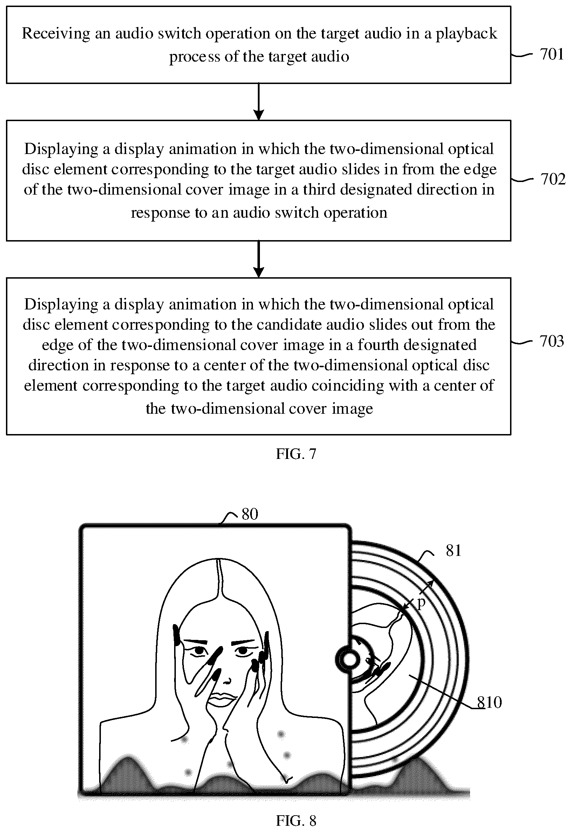

The process of performing an audio switch operation on the target audio and interface change of the audio playback interface are described in detail in following embodiments. Referring to FIG. 7, FIG. 7 is a flowchart of a method for displaying a playback interface according to some embodiments of the present disclosure. The method is applicable to the terminal shown in embodiments of FIG. 2. The method includes the following processes.

In S701, an audio switch operation on the target audio is received in a playback process of the target audio.

In some embodiments, a playlist is acquired in playing back the target audio, and the playlist is at least one of an audio list displayed in the audio playback application, a user-set audio playlist, an online station list, or a personalized station list. Illustratively, in a case where the playlist is implemented as the user-set audio playlist, the user creates a song list locally adds a played-back audio to the song list in playing back the audio, and directly selects the target audio from several audios in the song list for playback in subsequent use of the application; in a case where the playlist is implemented as the online station list, different types of audio station programs are set in the audio playback application, the audio station programs include at least one audio, and the user selects the online station list and plays back the target audio based on the playback order of the audio station programs; in a case where the playlist is implemented as the personalized station list, the station randomly plays back the target audio based on the listening behavior of the user, the terminal determines the audio of interest to subsequent users based on a total duration of playback of the target audio by the user and whether the user performs the favorites operation the target audio, and then adds the determined audio to the target audio for playback.

In some embodiments, the audio switch operation and the corresponding change process of the audio playback interface include, but are not limited to the following modes.

In a first mode, in the playback state of the target audio, a first predetermined operation on the two-dimensional optical disc element corresponding to the target audio is received to sequentially switch to a next or a previous audio of the target audio based on the playback order of the audios in the playlist for playback. For example, in a case where the playlist includes an audio 1, an audio 2, an audio 3, and an audio 4, the audio 3 is being played back, and the first predetermined operation on the two-dimensional optical disc element is received, the audio 4 is switched to for playback. The first predetermined operation is any of the slide operation, the hover slide operation, a tap operation, and the like.

Using the audio playback interface 610 in FIG. 6 as an example, in the playback process of the target audio, in a case where the user applies a downward rotation force to the two-dimensional optical disc element 62, that is, the user slides the signal clockwise, a next audio of the target audio is switched to for playback; and in a case where the user applies an upward rotation force to the two-dimensional optical disc element 62, that is, the user slides the signal counterclockwise, a previous audio of the target audio is switched to for playback.

Alternatively, using the center of two-dimensional optical disc element 62 as the symmetry axis, the two-dimensional optical disc element 62 is divided into an upper part and a lower part, and each of the upper part and the lower part is in a quarter-semicircle shape of the two-dimensional optical disc element 62. In a case where the tap operation is performed on the upper part of the two-dimensional optical disc element 62, the previous audio of the target audio is switched to for playback; and in a case where the tap operation is performed on the lower part of the two-dimensional optical disc element 62, the next audio of the target audio is switched to for playback.

In a second mode, in the playback state of the target audio, a trigger operation on the switch control is received to sequentially switch to a next or a previous audio of the target audio based on the playback order of the audios in the playlist for playback.

Using the audio playback interface 610 in FIG. 6 as an example, in a case where the user triggers a first switch sub-control on the left of the playback control 63, the previous audio of the target audio is switched to for playback; and in a case where the user triggers a second switch sub-control on the right of the playback control 63, the next audio of the target audio is switched to for playback.

In a third mode, with playback of the target audio until the target audio is played back, the next audio of the target audio is automatically switched to for playback based on the playback order of the audios in the playlist.

In a fourth mode, in the playback state of the target audio, an audio switch voice instruction is received to sequentially switch to a next or a previous audio of the target audio based on the playback order of the audios in the playlist for playback in response to the audio switch voice instruction.

In a fifth mode, in the playback state of the target audio, a global gesture operation is received, and the global gesture operation is used to instruct to switch playback of the audio in a case where the operation is performed on any interface of the terminal. A next or a previous audio of the target audio is sequentially switched to for playback based on the playback order of the audios in the playlist.

Using the audio playback interface 610 in FIG. 6 as an example, a closed circular gesture is drawn on the audio playback interface 610 to switch to the previous audio of the target audio for playback; and a closed triangle gesture is drawn on the audio playback interface 610 to switch to the next audio of the target audio for playback.

It should be noted that exemplary examples are shown in the above five cases, and the implementation process of the example does not limit the method for displaying the playback interface according to the embodiments of the present disclosure, that is, other technical means can also be used to achieve the purpose of switching the playback of the audio, which is not limited in the present disclosure.

In some embodiments, in playback of the target audio, a first playlist corresponding to the target audio and a second playlist corresponding to the album of the target audio are acquired. The first playlist is implemented as any of above described contents, and the second playlist is used to indicate at least one of a list of all audios in a digital album or a list of all audios in a film and television work. For example, the first playlist is implemented as a list of "I like" songs, including the audio 1, the audio 2, and the audio 3; and the second playlist is implemented as a list of songs in the digital album, including the audio 4, the audio 2, and the audio 5.

In some embodiments, in the playback state of the target audio, a second predetermined operation on the two-dimensional cover image is received to sequentially switch to a next or a previous audio of the target audio based on a playback order in a second playlist for playback.

In some embodiments, in the playback state of the target audio, a third predetermined operation on the two-dimensional cover image is received to sequentially switch to a next or a previous audio of the target audio based on a playback order in a first playlist for playback. That is, the audio in the album is switched based on the trigger operation on the two-dimensional cover image, and the audio in the current playlist is switched based on the trigger operation on the two-dimensional cover image.

Using the audio playback interface 610 in FIG. 6 as an example, the audio 2 is being played back, the first playlist includes the audio 1, the audio 2, and the audio 3, and the second playlist of the album of the audio 2 includes the audio 4, the audio 2, and the audio 5.

The audio in the list of the album is switched: a left slide operation is triggered in a square region corresponding to the two-dimensional cover image 61 to switch to a previous audio based on the second playlist for playback, that is, the audio 4 is played back; a left slide operation is triggered in a square region corresponding to the two-dimensional cover image 61 to switch to a next audio based on the second playlist for playback, that is, the audio 5 is played back.

Alternatively, using the center of the two-dimensional cover image 61 as the symmetry axis, the two-dimensional cover image 61 is divided into the upper part and the lower part, and each of the upper part and the lower part is in a half-rectangular shape of the two-dimensional cover image 61. In a case where the tap operation is performed on the upper part of the two-dimensional cover image 61, the previous audio of the target audio is switched to for playback, that is, the audio 4 is played back; and in a case where the tap operation is performed on the lower part of the two-dimensional cover image 61, the next audio of the target audio is switched to for playback, that is, the audio 5 is played back.

Alternatively, using the center of the two-dimensional cover image 61 as the symmetry axis, the two-dimensional cover image 61 is divided into a left region and a right region, and each of the left region and the right region is in a half-rectangular shape of the two-dimensional cover image 61. In a case where the tap operation is performed on the left region of the two-dimensional cover image 61, the previous audio of the target audio is switched to for playback, that is, the audio 4 is played back; and in a case where the tap operation is performed on the right region of the two-dimensional cover image 61, the next audio of the target audio is switched to for playback, that is, the audio 5 is played back.

The audio in the current playlist is switched: in a case where the user applies a downward rotation force to the two-dimensional optical disc element 62, that is, the user slides the signal clockwise, a next audio of the target audio is switched to for playback, that is, the audio 3 is played back; and in a case where the user applies an upward rotation force to the two-dimensional optical disc element 62, that is, the user slides the signal counterclockwise, a previous audio of the target audio is switched to for playback, that is, the audio 1 is played back.

Alternatively, using the center of two-dimensional optical disc element 62 as the symmetry axis, the two-dimensional optical disc element 62 is divided into an upper part and a lower part, and each of the upper part and the lower part is in a quarter-semicircle shape of the two-dimensional optical disc element 62. In a case where the trigger operation is performed on the upper part of the two-dimensional optical disc element 62, the previous audio of the target audio is switched to for playback, that is, the audio 1 is played back; and in a case where the trigger operation is performed on the lower part of the two-dimensional optical disc element 62, the next audio of the target audio is switched to for playback, that is, the audio 3 is played back. The trigger operation is any one of a long press operation, a tap operation, a hover point touch operation, a hover long press operation, and a pressure touch operation.

That is, the two-dimensional cover image and the two-dimensional optical disc element in the embodiments of the present disclosure are interactable. However, in some practices, the player is displayed in the form of the "optical disc" on the audio playback interface, the player fails to interact with a playback operation, a pause operation or a switch operation on the target audio, and the player occupies a large area in the entire audio playback interface, such that a utilization rate of controls in the display region of the player is low. The user needs to trigger a designated control to achieve the playback operation, the pause operations, and the switch operation, such that the playback efficiency of the audio and the efficiency of the human-computer interaction are reduced. The two-dimensional cover image and the two-dimensional optical disc element in the embodiments of the present disclosure are interactable, and the trigger operation on the two-dimensional cover image and the two-dimensional optical disc element is defined as at least one of the playback operation, the pause operation, and the switch operation of the audio, such that the efficiency of the human-computer interaction and the playback efficiency of the audio are effectively improved.

In S702, a display animation in which the two-dimensional optical disc element corresponding to the target audio slides in from the edge of the two-dimensional cover image in a third designated direction is displayed in response to an audio switch operation.

In a case where the target audio is in the playback state, a to-be-played-back candidate audio is determined based on the playlist and the audio switch operation.

In some embodiments, in the switch process of the audio, the display animation in which the two-dimensional optical disc element corresponding to the target audio slides in and is accommodated in the two-dimensional cover image in the third designated direction is displayed. The third designated direction is opposite to the direction in which the target audio slides in the two-dimensional cover image.

For the specific slide-out process, reference may be made to S502 and FIG. 6, which is not described herein. Illustratively, in the playback of the target audio, the audio playback interface displays a rotation animation in which the two-dimensional optical disc element corresponding to the target audio rotates at a predetermined rotation speed; in a case where the audio switch operation is received, the rotation animation of the two-dimensional optical disc element corresponding to the target audio is stopped, and the display animation in which the two-dimensional optical disc element corresponding to the target audio slides in from the two-dimensional cover image is displayed until the center of the two-dimensional optical disc element corresponding to the target audio coincides with the center of the two-dimensional cover image.

In S703, a display animation in which the two-dimensional optical disc element corresponding to the candidate audio slides out from the edge of the two-dimensional cover image in a fourth designated direction is displayed in response to the center of the two-dimensional optical disc element corresponding to the target audio coinciding with the center of the two-dimensional cover image.

In some embodiments, the center of the two-dimensional optical disc element corresponding to the target audio coinciding with the center of the two-dimensional cover image indicates that the two-dimensional optical disc element corresponding to the target audio is completely accommodated in the two-dimensional cover image.

In this case, the display animation in which the two-dimensional optical disc element corresponding to the candidate audio slides out from the edge of the two-dimensional cover image in the fourth designated direction is displayed. Specifically, slide-out of the candidate audio corresponding to the two-dimensional optical disc element is stopped in response to the center of the two-dimensional optical disc element corresponding to the candidate audio coinciding with the center of the two-dimensional cover image, and a display animation in which the two-dimensional optical disc element corresponding to the candidate audio slides out from the edge of the two-dimensional cover image in the predetermined speed curve in S302 or a predetermined speed curve different from the predetermined speed curve in S302 is displayed. For the detailed process, reference may be made to S302 and FIG. 2.

In summary, by switching the target audio to the playback state, the display animation in which the two-dimensional optical disc element slides out from the two-dimensional cover image is simulated on the audio playback interface, such that the audio playback interface displays a stronger visualization animation effect during playback of the target audio, interaction forms between the user operation and interface display are enriched, and the efficiency of human-computer interaction is improved.

In the method according to the embodiments of the present disclosure, in switching the target audio, the display animation in which the two-dimensional optical disc element slides in the two-dimensional cover image is displayed, and the display animation in which another two-dimensional optical disc element slides out from the two-dimensional cover image is then displayed, such that reality of simulation of the slide-in and slide-out animation of the optical disc is improved, and the visual display effect of the audio playback interface is improved.

In conjunction with the embodiments of S301 to S302, and S501 to S502, it should be noted that the trigger operation on the two-dimensional cover image and the two-dimensional optical disc element is used to achieve the audio switch function and adjust the playback speed of the target audio and the playback progress of the target audio, and to achieve other functions. It should be further noted that the target audio is in the playback state in achieving above functions. The following are described using the audio playback interface 610 in FIG. 6 as an example.

### For a case where the trigger operation is used to adjust the playback speed of the target audio

In a first case: the trigger operation on the two-dimensional cover image is received. Using the center of the two-dimensional cover image 61 as the symmetry axis, the two-dimensional cover image 61 is divided into the upper part and the lower part, and each of the upper part and the lower part is in a half-rectangular shape of the two-dimensional cover image 61. In a case where the predetermined operation is performed on the upper part of the two-dimensional cover image 61, the playback speed of the target audio is adjusted, and the adjusted playback speed is slower than the playback speed before adjustment, for example, from 1x speed to 0.5x speed; and in a case where the predetermined operation is performed on the lower part of the two-dimensional cover image 61, the playback speed of the target audio is adjusted, and the adjusted playback speed is greater than the playback speed before adjustment, for example, from 1x speed to 2x speed. Using the center of the two-dimensional cover image 61 as the symmetry axis, the two-dimensional cover image 61 is divided into the left region and the right region, and each of the left region and the right region is in a half-rectangular shape of the two-dimensional cover image 61. In a case where the predetermined operation is performed on the left region of the two-dimensional cover image 61, the playback speed of the target audio is adjusted, and the adjusted playback speed is slower than the playback speed before adjustment, for example, from 1x speed to 0.5x speed; and in a case where the predetermined operation is performed on the right region of the two-dimensional cover image 61, the playback speed of the target audio is adjusted, and the adjusted playback speed is greater than the playback speed before adjustment, for example, from 1x speed to 2x speed. The predetermined operation is any one of a long press operation, a tap operation, a hover point touch operation, and a hover long press operation.

Alternatively, pressure touch operations on different regions of the two-dimensional cover image 61 are received, and the playback speed of the target audio is dynamically adjusted based on the pressure value corresponding to the pressure touch operation.

Specifically, in a case where the pressure value corresponding to the pressure touch operation gradually increases, the playback speed of the target audio gradually slows down in implementing slow playback, that is, the pressure value increase negatively with the playback speed; and the playback speed of the target audio gradually becomes faster in implementing fast playback, that is, the pressure value increases positively with the playback speed;

in a case where the pressure value corresponding to the pressure touch operation gradually reduces, the playback speed of the target audio gradually becomes faster in implementing slow playback; and the playback speed of the target audio gradually slows down in implementing fast playback. Illustratively, in a case where the gradually increasing pressure touch operation is received, the playback speed is dynamically adjusted from 1x speed, 2x speed, 2.5x speed, and then to 3x speed in implementing fast playback, and the playback speed is dynamically adjusted from 2x speed, 1x speed, 0.75x speed, and then to 0.5x speed in implementing slow playback.

In a second case: the trigger operation on the two-dimensional optical disc element is received. In a case where the user applies a downward rotation force to the two-dimensional optical disc element 62, that is, the user slides the signal clockwise, the playback speed of the target audio is adjusted, and the adjusted playback speed is slower than the playback speed before adjustment, for example, from 1x speed to 0.5x speed; and the playback speed of the target audio is adjusted, and the adjusted playback speed is greater than the playback speed before adjustment, for example, from 1x speed to 2x speed.

Alternatively, using the center of two-dimensional optical disc element 62 as the symmetry axis, the two-dimensional optical disc element 62 is divided into an upper part and a lower part, and each of the upper part and the lower part is in a quarter-semicircle shape of the two-dimensional optical disc element 62. In a case where the trigger operation is performed on the upper part of the two-dimensional optical disc element 62, the playback speed of the target audio is adjusted, and the adjusted playback speed is slower than the playback speed before adjustment, for example, from 1x speed to 0.5x speed; and in a case where the trigger operation is performed on the lower part of the two-dimensional optical disc element 62, the playback speed of the target audio is adjusted, and the adjusted playback speed is greater than the playback speed before adjustment, for example, from 1x speed to 2x speed. The trigger operation is any one of a long press operation, a tap operation, a hover point touch operation, a hover long press operation, and a pressure touch operation.

### For a case where the trigger operation is used to adjust the playback progress of the target audio

In a first case: the trigger operation on the two-dimensional cover image is received. The trigger operation on the two-dimensional cover image is received. Using the center of the two-dimensional cover image 61 as the symmetry axis, the two-dimensional cover image 61 is divided into the upper part and the lower part, and each of the upper part and the lower part is in a half-rectangular shape of the two-dimensional cover image 61. In a case where the predetermined operation is performed on the upper part of the two-dimensional cover image 61, the playback progress of the target audio is adjusted to jump forwards to a period corresponding to a predetermined number of lines based on text data corresponding to the target audio. For example, the text data corresponding to the target audio includes four lines of text data: "two tigers, two tigers", "run fast, run fast", "one has no ear", and "one has no tail"; the audio data corresponding to the second line of text data "run fast, run fast" is played back, the predetermined operation is received at the moment when the second line of text data is played back at 4", and thus the audio data corresponding to the previous line of text data is switched to for playback, that is, a period sum of the 10" period corresponding to the first line of text data "two tigers, two tigers" and a period of the 8" period corresponding to the second text data "two tigers, two tigers" that is played back minus the 4" period corresponding to the second line of text data that has been played is jumped forwards for playback, that is, jumps forwards (fast backward) 14" period, 14"=10" + (8"-4"). In a case where the predetermined operation is performed on the lower part of the two-dimensional cover image 61, the playback progress of the target audio is adjusted to jump backwards to a period corresponding to a predetermined number of lines based on text data corresponding to the target audio. For details of calculation of the period for jumping, reference may be made to above solutions. In some embodiments, using the center of the two-dimensional cover image 61 as the symmetry axis, the two-dimensional cover image 61 is divided into the left region and the right region, and the playback progress is adjusted in the left region and the right region, which is not repeated herein. The predetermined operation is any one of a long press operation, a tap operation, a hover point touch operation, a hover long press operation, and a pressure touch operation.

In a second case, the trigger operation on the two-dimensional optical disc element is received. Using the center of two-dimensional optical disc element 62 as the symmetry axis, the two-dimensional optical disc element 62 is divided into an upper part and a lower part, and each of the upper part and the lower part is in a quarter-semicircle shape of the two-dimensional optical disc element 62. In a case where the predetermined operation is performed on the upper part of the two-dimensional cover image 61, the playback progress of the target audio is adjusted to jump forwards to a period corresponding to a predetermined number of lines based on text data corresponding to the target audio. In a case where the predetermined operation is performed on the lower part of the two-dimensional cover image 61, the playback progress of the target audio is adjusted to jump backwards to a period corresponding to a predetermined number of lines based on text data corresponding to the target audio. The predetermined operation is any one of a long press operation, a tap operation, a hover point touch operation, a hover long press operation, and a pressure touch operation.

### For a case where the trigger operation is used to adjust he playback speed and the playback progress of the target audio

The playback speed of the target audio is adjusted based on the trigger operation performed on the upper part of the two-dimensional cover image, and the playback progress of the target audio is adjusted based on the trigger operation performed on the upper part of the two-dimensional optical disc element.

The playback speed of the target audio is adjusted based on the trigger operation performed on the upper part of the two-dimensional cover image, and the playback progress of the target audio is adjusted based on the trigger operation performed on the upper part of the two-dimensional optical disc element. For detailed implementation processes, reference may be made to above description, which are not repeated herein.

In summary, by switching the target audio to the playback state, the display animation in which the two-dimensional optical disc element slides out from the two-dimensional cover image is simulated on the audio playback interface, such that the audio playback interface displays a stronger visualization animation effect during playback of the target audio, interaction forms between the user operation and interface display are enriched, and the efficiency of human-computer interaction is improved.

In the method according to the embodiments of the present disclosure, the two-dimensional cover image and the two-dimensional optical disc element are implemented as interactable elements, and the target audio is adjusted based on relevant operations on the two-dimensional cover image and the two-dimensional optical disc element, such that the use efficiency of the controls is improved to some extent, the use scenarios of the control are enriched, and the efficiency of human-computer interaction is improved.

In some embodiments, upon acquisition of the image information corresponding to the target audio, a display effect of the two-dimensional optical disc element corresponding to the target audio is determined based on the image information. The display effect includes at least one of a display image, a display color, a display texture, or a display word.

In some embodiments, the display color of the two-dimensional optical disc element is mainly determined based on the image information displayed in the two-dimensional cover image using a color extraction technique. That is, the display effect of the two-dimensional optical disc element changes with change of the image information associated with the target audio. The color extraction process includes:
acquiring color data matched with the image information corresponding to the target audio, where the image information is displayed in the two-dimensional cover image;
determining color samples corresponding to the two-dimensional optical disc elements based on the color data;
matching the color data corresponding to the image information with a predetermined color library to determine color value data corresponding to the two-dimensional optical disc elements; and
superimposing the color data and the color value data to determine an optical disc display color corresponding to the two-dimensional optical disc element.

In some embodiments, upon determination of the optical disc display color of the two-dimensional optical disc element, the optical disc display texture, the optical disc display word, and the optical disc display dynamic effect of the two-dimensional optical disc element are set.

In some embodiments, the two-dimensional optical disc element is implemented as a texture optical disc or a smooth optical disc, which is not limited in the present disclosure.

Specifically, in a case where the two-dimensional optical disc element is implemented as a texture optical disc, reference may be made to the structural diagram of the two-dimensional optical disc element shown in FIG. 8. The two-dimensional optical disc element 81 includes an optical disc center region 810 and an optical disc ring region with a ring diameter p connected with the optical disc center region 810. The optical disc center region is implemented as a smooth face, and an image with the same information as that displayed in the two-dimensional cover image 80 is displayed in the optical disc center region. The optical disc ring region is implemented as a texture face, and the texture face displays any of image information, texture information, and word information. In the embodiments of the present disclosure, the optical disc ring region displays a designated color image associated with the image information displayed in the two-dimensional cover image 80.

The optical disc center region 810 of the two-dimensional optical disc element 81 and the two-dimensional cover image 80 display the same cover image corresponding to the target audio, and the optical disc ring region determines the final displayed color using above color extraction operation.

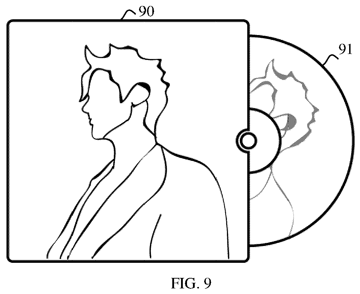

In a case where the two-dimensional optical disc element is implemented as a smooth optical disc, reference may be made to the structural diagram of the two-dimensional optical disc element shown in FIG. 9. The image information associated with the target audio in the two-dimensional cover image 90 is determined as the cover image of the two-dimensional optical disc element 91 for display. The display transparency of the image information in the two-dimensional cover image 90 is the same or different from the display transparency of the image information in the two-dimensional optical disc element 91, which is not limited in the present disclosure.

In summary, by switching the target audio to the playback state, the display animation in which the two-dimensional optical disc element slides out from the two-dimensional cover image is simulated on the audio playback interface, such that the audio playback interface displays a stronger visualization animation effect during playback of the target audio, interaction forms between the user operation and interface display are enriched, and the efficiency of human-computer interaction is improved.

The method according to the embodiments of the present disclosure provide more possibilities for the two-dimensional optical disc element, such that the diversity of elements in the audio playback interface is increased and enriched.

In conjunction with the introduction of the embodiments of S301 to s302 and S501 to s502, it should be further noted that in the playback of the target audio, in addition to the slide-out display animation, the slide-in display animation, and the rotation animation in S301 to S302 and S501 to S502, the audio playback interface further displays a spectrum animation, a playback background dynamic effect animation, a text dissipation animation, and the like corresponding to the target audio. The following describes the implementation process of the spectrum animation, the playback background dynamic effect animation, and the text dissipation animation and the change of the audio playback interface.

**The spectrum animation:** in some embodiments, the spectrum animation corresponding to the target audio is displayed in the playback process of the target audio.

Illustratively, in the playback process of the audio, the spectrum animation changes with the corresponding music rhythm of the target audio. Specifically, the visual amplitude of the spectrum animation is enhanced in a case where the corresponding tone and/or rhythm of the target audio is high/fast; and the visual amplitude of the spectrum animation is reduced in a case where the corresponding tone and/or rhythm of the target audio is low/slow.

In some embodiments, the method for acquiring the spectrum animation includes:
calculating an amplitude value of the target audio by performing short-time Fourier transform on pulse-code modulation (PCM) data corresponding to the target audio; performing a process matched with the human ear auditory transformation on the calculated amplitude value, for example, A-weight weighted filtering algorithm and Mel scale conversion; and then performing intra-frame and inter-frame data smooth processing on the processed amplitude value, and visually displaying the processed data, that is, the spectrum animation.

In some embodiments, the display form of the spectrum animation includes a planar spectrum animation.

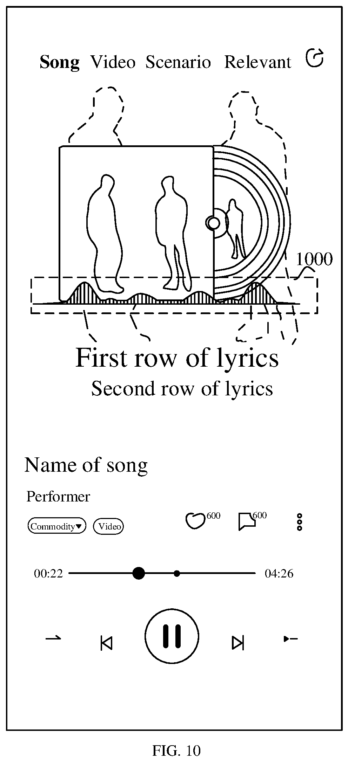

In some embodiments, a display position of the planar spectrum animation includes, but is not limited to a center position of the two-dimensional cover image, any side of the two-dimensional cover image (the side includes an upper side, a lower side, a left side, and a right side of the two-dimensional cover image), any side of the audio playback interface (the side includes an upper side, a lower side, a left side, and a right side of the audio playback interface), a periphery of the audio playback interface, a periphery of the two-dimensional cover image, and the like, which is not limited in the present disclosure. As shown in FIG. 10, FIG. 10 is a schematic diagram of a display position of a spectrum animation according to some embodiments of the present disclosure. The spectrum animation 1000 is displayed on a lower edge of the two-dimensional cover image.

**The playback background dynamic effect animation:** in some embodiments, a playback background is further displayed in the audio playback interface. A scale-up parameter of the target audio to a current playback frame is acquired in response to the target audio switching to the playback state, and the scale-up parameter is used to indicate a maximum inter-frame frequency of a sound wave of the target audio. A scale animation of the playback background is displayed on the audio playback interface in a case where the scale-up parameter of the target audio to the current playback frame is greater than a predetermined threshold.

In some embodiments, the scale-up parameter is acquired by:
acquiring PCM data of an audio frame that is being played back in the target audio, calculating a root-mean-square value of the loudness of the audio frame that is being played back based on the PCM data, and normalizing the root-mean-square value to acquire the scale-up parameter.

In some embodiments, in the playback process of the target audio, in a case where a corresponding scale-up parameter of a first audio frame is greater than the predetermined data, the scale animation of the playback background is displayed as the playback time of the scale animation is usually longer than the time corresponding to the audio frame; in the playback of the scale animation, a scale-up parameter corresponding to a second audio frame and the scale-up parameter corresponding to the first audio frame are compared, and in a case where the scale-up parameter corresponding to the second audio frame is greater than the scale-up parameter corresponding to the first audio frame, the scale animation that is being played back is interrupted and a new scale animation is played back; and in a case where the scale-up parameter corresponding to the second audio frame is less than or equal to the scale-up parameter corresponding to the first audio frame, the scale animation that is being played back continues.

Alternatively, in a case where the scale animation that is being played back ends, whether to play back the scale animation of the playback background is determined by comparing the scale-up parameter corresponding to a first audio frame upon end of the scale animation and the predetermined threshold.

In some embodiments, the audio playback interface further displays a playback background, and the method for acquiring the background image includes: acquiring image information associated with the target audio, wherein the image information includes, but is not limited to, at least one of the audio cover image corresponding to the target audio, the album cover image corresponding to the album of the target audio, the story image or theater image corresponding to the film and television work of the target audio, and the custom cover image uploaded and set by the user.

In some embodiments, the image information is processed by Gaussian fuzzy processing, the processed image information is acquired and determined as the playback background of the audio playback interface.

In some embodiments, the image information is sampled by above color extraction operation, and p colors are determined based on the color proportion. p is a positive integer. The p colors are fused to acquire a gradient playback background, and the gradient playback background is determined as the playback background of the audio playback interface.

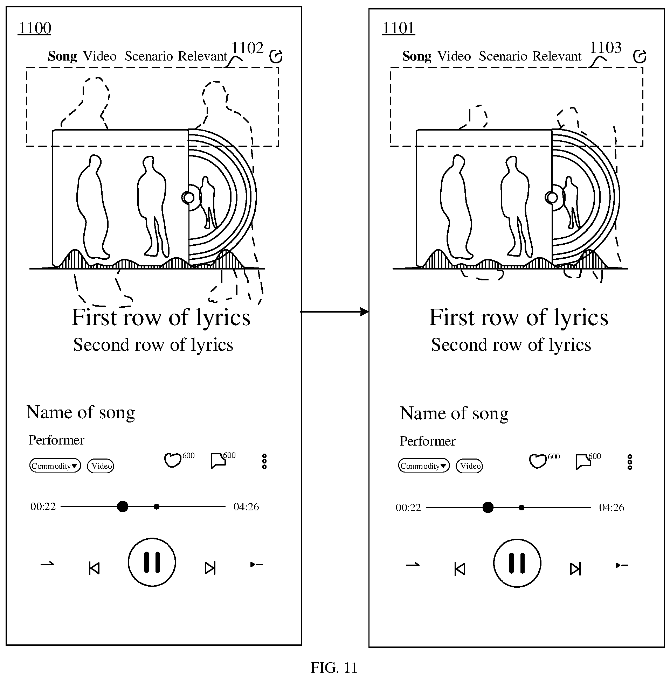

In some embodiments, the scale animation of the playback background is an animation of restoring of a part region of the cover image upon the Gaussian fuzzy processing from the scaled-up display to the normal display; or, the scale animation of the playback background is an animation of restoring of a part region of the cover image upon the Gaussian fuzzy processing from the scaled-down display to the normal display. As shown in FIG. 11, the cover image of the target audio is processed by the Gaussian fuzzy processing, and the cover image upon the Gaussian fuzzy processing is determined as the playback background for playback. The scale animation corresponding to the playback background is played back based on the inter-frame scale-up parameter, and the display process of the playback background is switched from the audio playback interface 1100 to the audio playback interface 1101. Obviously, the scale ratio of the playback background 1102 in the audio playback interface 1100 is greater than the scale ratio of the playback background 1103 in the audio playback interface 1100.

**The text dissipation animation:** in some embodiments, the audio playback interface further includes a text display region for displaying text content data corresponding to the target audio, and the text content data is implemented as at least one of the lyrics or lines. The method for displaying the text content data also includes the following processes.

In a first step, corresponding m rows of text content data in the text content data are displayed in the text display region based on a playback progress of the target audio in response to the target audio switching to the playback state, wherein m is a positive integer, and a word display format corresponding to the m rows of text content data dynamically changes with the playback progress of the target audio, wherein the word display format includes at least one of a word color, a word size, a word texture, or a word transparency.

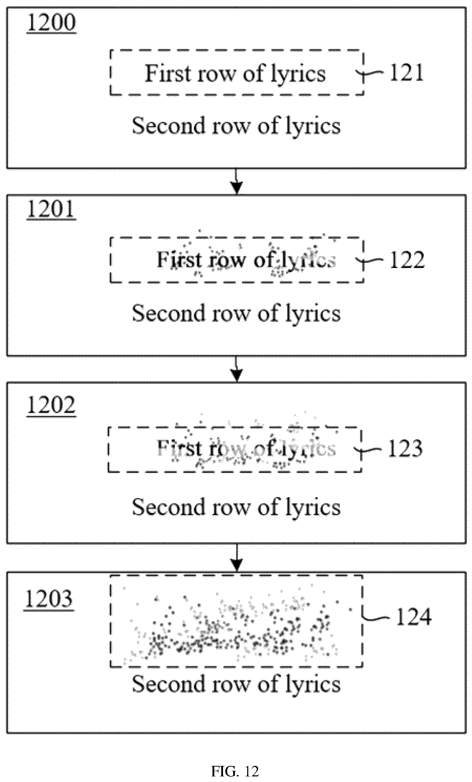

Illustratively, in the playback of the audio work, text content data corresponding to m rows of audio is displayed in real time in the text display region. In a case where m is 2, first text and second text are displayed in real time in the text display region, the first text is used to indicate text content data that is being played back, and the second text is used to indicate text content data that is to be played back. In some embodiments, the first text is displayed at a first transparency in a target position of the text display region, and the second text is displayed at a second transparency below the first text. The target position is a position with a distance from a first edge of the text display region being less than a predetermined distance, the first transparency is less than the second transparency, and a display end time of the second text is after a display end time of the first text. For a display state of the first text and a display state of the second text, reference may be made to the text display region 1200 in FIG. 12. In a case where m is 3, third text, fourth text, and fifth text are displayed in real time in the text display region. The fourth text is used to indicate text content data that is being played back, the third text is used to indicate a previous row of text content data that has been played back, and the fifth text is used to indicate the text content data that is to be played back.

In a second step, a dissipation animation corresponding to an i^{th} row of text content data is displayed in response to an end of playback of an audio frame corresponding to the i^{th} row of text content data.

The dissipation animation is an animation in which the word corresponding to the text content data that has been played back is dispersed as a plurality of particles and disappears in a predetermined direction. Illustratively, the dissipation animation mainly includes two parts. In a first part, the first transparency corresponding to the first text reduces to a designated transparency; and in a second part, a dispersion animation of particles is displayed.

In some embodiments, the designated transparency is a product of the transparency corresponding to the first text and the transparency corresponding to the p dispersion animation of particles. For example, using an example where m is 2, the transparency corresponding to the first text is 70%, the transparency corresponding to the dispersion animation of particles is 20%, and thus the designated transparency is 1.4%.

Illustratively, a particle sequence frame matched with a texture length is played back in the position of the first text based on the texture length corresponding to the first text, and the transparency corresponding to the first text reduces to the designated transparency concurrently. As such, the dissipation animation of the first text is played back.

Referring to FIG. 12, FIG. 12 shows a schematic diagram of a process of a dissipation animation of the first text. As shown in FIG. 12, in the interface 1200, in playback of lyrics 121 of a song, the text display format of the lyrics 121 in the text content data is automatically adjusted based on the playback progress; after the lyrics 121 are played back, as shown in the interface 1201 and the interface 1202, the particle sequence frame is covered with different transparencies in lyrics 122 and 123 as the playback progress to simulate a dissipating effect of the playback word into particles; and in the interface 1203, the lyrics have been completely dispersed as particles, and the dissipation animation ends.

In some embodiments, after the dissipation animation of a q^{th} row of text content data ends, a (q+1)^{th} row of text content data moves to a display position of the q^{th} row of text content data, a transparency corresponding to the (q+1)^{th} row of text content data is adjusted to correspond to the transparency corresponding to the q^{th} row of text content data, and a text size corresponding to the (q+1)^{th} row of text content data increases to a text size corresponding to the q^{th} row of text content data.

In summary, by switching the target audio to the playback state, the display animation in which the two-dimensional optical disc element slides out from the two-dimensional cover image is simulated on the audio playback interface, such that the audio playback interface displays a stronger visualization animation effect during playback of the target audio, interaction forms between the user operation and interface display are enriched, and the efficiency of human-computer interaction is improved.

In the method according to the embodiments of the present disclosure, in a case where the target audio switches to the playback state, the spectrum animation corresponding to the target audio is displayed, and the audio data corresponding to the target audio is visually displayed, such that the efficiency of human-computer interaction and the playback efficiency of the target audio are improved.

In the method according to the embodiments of the present disclosure, in a case where the target audio switches to the playback state, in a case where the scale-up parameter of the current playback frame of the target audio is greater than the predetermined threshold, diversified processing operations are performed on the playback background of the target audio, and the corresponding scale animation is displayed in the audio playback interface to visually represent the rhythm of the target audio, such that the expressivity of the audio playback interface for the target audio is enhanced.

In the method according to the embodiments of the present disclosure, the corresponding color of the two-dimensional optical disc element is determined based on the color data corresponding to the image information of the target audio, and the suitability of the target audio and the two-dimensional optical disc element in the display process is improved.

In the method according to the embodiments of the present disclosure, in a case where the target audio switches to the playback state, the dissipation animation of the text content data is displayed in the audio playback interface, such that the display form of the text content data in the audio playback interface is enriched, and the efficiency of human-computer interaction is improved.

In some embodiments, the two-dimensional cover image and the two-dimensional optical disc element displayed in the audio playback interface are in a three-dimensional form. That is, the two-dimensional cover image and the two-dimensional optical disc element change to a three-dimensional form, and a stereoscopic effect of open and display of the optical disc from the optical disc cartridge. The specific implementation principle is as follows. A virtual three-dimensional space is set at a designated position of the audio playback interface, and vertex coordinates of the three-dimensional cover housing, the three-dimensional optical disc element, and other materials are converted into the virtual three-dimensional space through a mapping matrix to simulate a visual effect of the object in real life, that is, being large in a near position and being small in a far position.

In some embodiments, the three-dimensional optical disc element corresponding to the target audio is disposed in an optical disc slot in a three-dimensional cover housing and appears as an optical disc housing corresponding to the three-dimensional cover housing is opened. The specific display method includes the following steps.

In a first step, an audio playback interface is displayed.

The audio playback interface is a display and operation interface for playing back the target audio work. In some embodiments, the designated position of the audio playback interface is implemented as a three-dimensional display space, and the three-dimensional display space is used to display the three-dimensional cover housing and the three-dimensional optical disc element corresponding to the target audio. In a case where the target audio is not played back, the three-dimensional optical disc element is accommodated in the three-dimensional cover housing and is invisible.

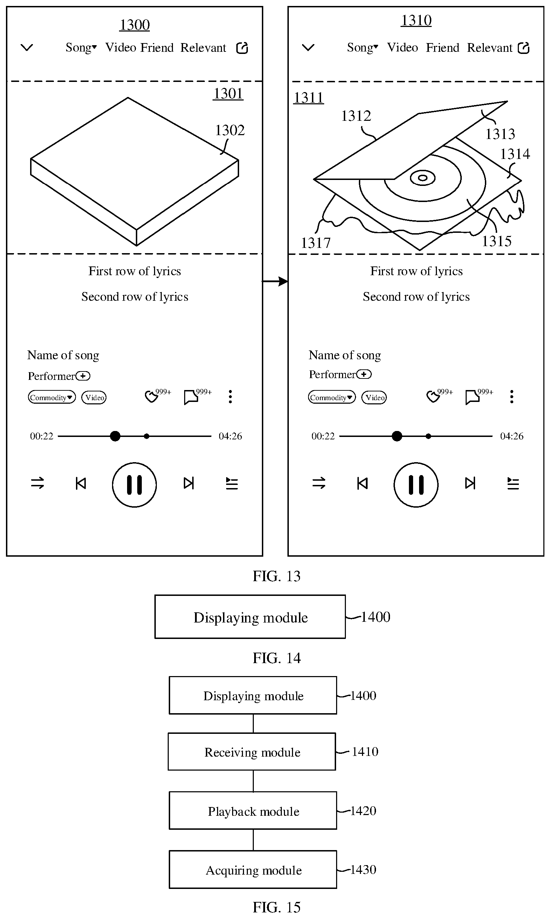

Illustratively, referring to FIG. 13, the interface 1300 displays the three-dimensional display space 1301. In a case where the target audio is at the start of the playback state, only the three-dimensional cover housing 1302 is displayed in the three-dimensional display space 1301, and the three-dimensional optical disc element is accommodated in an invisible space inside the three-dimensional cover housing 1302.

In a second step, in response to the target audio switching to the playback state, a housing opening animation corresponding to the three-dimensional cover housing is displayed, wherein the three-dimensional optical disc element is disposed in the optical disc slot in the three-dimensional cover housing, and the three-dimensional optical disc element appears from the three-dimensional cover housing as the album housing corresponding to the three-dimensional cover housing is opened.

Illustratively, referring to FIG. 13, after the target audio starts to play back, an opening animation of an upper housing 1313 and a lower housing 1314 of the three-dimensional cover housing 1312 is displayed in the three-dimensional display space 1311 of the interface 1310. The opening animation is implemented as an animation in which the upper housing 1313 is fixed and the lower housing 1314 unfolds downwards; or the opening animation is implemented as an animation in which the upper housing 1313 unfolds upwards and the lower housing 1314 is fixed; or the opening animation is implemented as an animation in which the upper housing 1313 unfolds upwards and the lower housing 1314 unfolds downwards, which is not limited in the embodiments of the present disclosure.

Illustratively, after the opening animation of the upper housing 1313 and the lower housing 1314 ends, that is, after the album housing corresponding to the three-dimensional cover housing 1312 is opened, the three-dimensional optical disc element 1315 is disposed in the optical disc slot in the three-dimensional cover housing 1312, and appears as the album housing corresponding to the three-dimensional cover housing 1312 is opened.

In some embodiments, in response to the target audio switching to the playback state, the target audio work is played back. After the opening animation of the album housing corresponding to the three-dimensional cover housing ends, the rotation animation in which the three-dimensional optical disc element rotates around the center of the optical disc slot in the three-dimensional album element is displayed.

In a third step, in response to a target audio work switching to a playback pause state, a closing animation of the three-dimensional cover housing is displayed, and the three-dimensional optical disc element is accommodated in the three-dimensional cover housing with closing of the three-dimensional cover housing.

In some embodiments, the three-dimensional cover housing is implemented as an openable three-dimensional box structure, and the closing animation of the three-dimensional housing element is to close the accommodation space of the box. Illustratively, in a case where the three-dimensional box structure includes an upper box body and a lower box body, the opening animation is implemented as a closing animation in which the lower box body is fixed and the upper box body closes towards the lower box body; or the opening animation is implemented as a closing animation in which the upper box body is fixed and the lower box body closes towards the upper box body; or the opening animation is implemented as a closing animation in which the upper box body closes towards the lower box body and the lower box body closes towards the upper box body.

In some embodiments, the three-dimensional optical disc element is accommodated in the three-dimensional cover housing with closing of the three-dimensional cover housing in the following cases.

In a first case, the three-dimensional optical disc element changes from a complete visible state to a complete invisible state with closing of the three-dimensional cover housing.

In a second case, the three-dimensional optical disc element changes from a complete visible state to a partial visible state with closing of the three-dimensional cover housing.

In a third case, the three-dimensional optical disc element changes from a partial visible state to a complete invisible state with closing of the three-dimensional cover housing.

In a fourth case, the three-dimensional optical disc element changes from a third part visible state to a fourth part visible state with closing of the three-dimensional cover housing. A proportion of the third part to a three-dimensional audio carrier element is greater than a proportion of the fourth part to the three-dimensional audio carrier element.

In some embodiments, in response to the target audio switching to the playback pausing state, playback of the target audio is stopped in the audio playback interface, and display of the rotation animation of the three-dimensional optical disc element is stopped.

In a fourth step, in response to the target audio switching to another audio, a switch animation of the three-dimensional cover housing and the three-dimensional optical disc element in the audio playback interface is displayed. In some embodiments, the switch animation is implemented as an animation in which the three-dimensional cover housing and the three-dimensional optical disc element move from current display positions to positions outside a designated edge of the audio playback interface; or the switch animation is implemented as an animation in which the three-dimensional cover housing and the three-dimensional optical disc element directly disappear from the audio playback interface.

In some embodiments, the switch animation is displayed in at least one of the following cases.
1. The switch animation of the three-dimensional cover housing and the three-dimensional optical disc element is directly displayed in the audio playback interface.
2. The closing animation of the three-dimensional cover housing is displayed in the current audio playback interface, the three-dimensional optical disc element is accommodated in the three-dimensional cover housing as closing of the three-dimensional cover housing, and the switch animation of the three-dimensional cover housing and the three-dimensional optical disc element is then displayed.

In some embodiments, a spectrum animation corresponding to the target audio is acquired in the playback of the target audio and displayed in a periphery of a three-dimensional space formed by the three-dimensional cover housing and the three-dimensional optical disc element. As shown in FIG. 13, the spectrum animation 1317 is displayed in a three-dimensional space formed by the three-dimensional cover housing and the three-dimensional optical disc element in a 3D surrounding mode.

In the method according to the embodiments of the present disclosure, the opening animation of the three-dimensional cover housing is simulated through a three-dimensional implementation, and the three-dimensional optical disc element appears from the three-dimensional cover housing as opening of the three-dimensional cover housing, such that the corresponding animation effect is displayed in the audio playback interface in the process of switching the playback state of the target audio player, and the efficiency of human-computer interaction and the playback efficiency of the target audio are improved.

Simulation of the slide-out and slide-in effects of the optical disc from/to the optical disc cartridge in the form of the two-dimensional animation and the three-dimensional animation is described above. In the actual application process, the user may change the display dimension of the player in the audio playback interface. For example, the user switches from two-dimensional display to three-dimensional display, or from three-dimensional display to two-dimensional display, which is not limited in the present disclosure.

Referring to FIG. 14, FIG. 14 is a schematic structural diagram of an apparatus for displaying a playback interface according to some embodiments of the present disclosure. The apparatus includes a displaying module 1400.

The displaying module 1400 is configured to display an audio playback interface, wherein the audio playback interface includes a two-dimensional cover image corresponding to a target audio; and
the displaying module 1400 is further configured to display an animation in which a two-dimensional optical disc element corresponding to the target audio slides out from an edge of the two-dimensional cover image in a first designated direction in response to the target audio switching to a playback state.

In some embodiments, the displaying module 1400 is further configured to display a display animation in which the two-dimensional optical disc element corresponding to the target audio slides out from the edge of the two-dimensional cover image in response to the target audio switching to the playback state; and
the displaying module 1400 is further configured to stop slide-out of the two-dimensional optical disc element in response to the two-dimensional optical disc element sliding to a designated position, and display a rotation animation of the two-dimensional optical disc element, wherein the rotation animation is used to represent that the target audio is in the playback state.

In some embodiments, the displaying module 1400 is further configured to stop the slide-out of the two-dimensional optical disc element corresponding to the target audio in response to a center of circle of the two-dimensional optical disc element coinciding with the edge of the two-dimensional cover image, and displaying the rotation animation of the two-dimensional optical disc element corresponding to the target audio.

In some embodiments, the displaying module 1400 is further configured to display the display animation in which the two-dimensional optical disc element corresponding to the target audio slides out from the edge of the two-dimensional cover image at a predetermined speed curve, wherein the predetermined speed curve includes a constant speed curve or a variable speed curve.

In some embodiments, the displaying module 1400 is further configured to display an animation in which the two-dimensional optical disc element corresponding to the target audio slides in from the two-dimensional cover image in a second designated direction in response to the target audio switching from the playback state to a pause state.

In some embodiments, the displaying module 1400 is further configured to stop playing back a rotation animation of the two-dimensional optical disc element corresponding to the target audio in response to the target audio switching to the pause state, and display a display animation in which the two-dimensional optical disc element corresponding to the target audio slides in from the edge of the two-dimensional cover image.

In some embodiments, as shown in FIG. 15, the apparatus further includes a receiving module 1410 and a playback module 1420.

The receiving module 1410 is configured to receive a slide operation on the two-dimensional optical disc element corresponding to the target audio in a playback process of the target audio; and
the playback module 1420 is configured to display a display animation in which the two-dimensional optical disc element corresponding to the target audio slides in from the edge of the two-dimensional cover image and a display animation in which a two-dimensional optical disc element corresponding to a candidate audio slides out from the edge of the two-dimensional cover image based on the slide operation, wherein the candidate audio is used to indicate an audio with a playback sequence subsequent to the target audio.

In some embodiments, as shown in FIG. 15, the displaying module 1400 is further configured to display a spectrum animation corresponding to the target audio in a playback process of the target audio.

In some embodiments, as shown in FIG. 15, the audio playback interface includes a playback background, and the apparatus further includes an acquiring module 1430.

The acquiring module 1430 is configured to acquire a scale-up parameter of the target audio to a current playback frame in response to the target audio switching to the playback state, wherein the scale-up parameter is used to indicate a maximum inter-frame frequency of a sound wave of the target audio; and
the displaying module 1400 is further configured to display a scale animation of the playback background on the audio playback interface in a case where the scale-up parameter of the target audio to the current playback frame is greater than a predetermined threshold.

In some embodiments, as shown in FIG. 15, the audio playback interface includes a text display region used to display text content data corresponding to the target audio, and
the displaying module 1400 is further configured to display corresponding m rows of text content data in the text content data in the text display region based on a playback progress of the target audio in response to the target audio switching to the playback state, wherein m is a positive integer, and a word display format corresponding to the m rows of text content data dynamically changes with the playback progress of the target audio, wherein the word display format includes at least one of a word color, a word size, a word texture, or a word transparency; and
the displaying module 1400 is further configured to display a dissipation animation corresponding to an ith row of text content data in response to an end of playback of an audio frame corresponding to the ith row of text content data.

In some embodiments, as shown in FIG. 15, the acquiring module 1430 is further configured to: acquire image information of the target audio, wherein the image information is used to indicate an image associated with the target audio; and
determine a display effect of the two-dimensional optical disc element corresponding to the target audio based on the image information, wherein the display effect includes at least one of a display image, a display color, or a display texture.

In summary, by switching the target audio to the playback state, the display animation in which the two-dimensional optical disc element slides out from the two-dimensional cover image is simulated on the audio playback interface, such that the audio playback interface displays a stronger visualization animation effect during playback of the target audio, interaction forms between the user operation and interface display are enriched, and the efficiency of human-computer interaction is improved.

In the method according to the embodiments of the present disclosure, in a case where the target audio switches to the playback state, the spectrum animation corresponding to the target audio is displayed, and the audio data corresponding to the target audio is visually displayed, such that the efficiency of human-computer interaction and the playback efficiency of the target audio are improved.

In the method according to the embodiments of the present disclosure, in a case where the target audio switches to the playback state, in a case where the scale-up parameter of the current playback frame of the target audio is greater than the predetermined threshold, diversified processing operations are performed on the playback background of the target audio, and the corresponding scale animation is displayed in the audio playback interface to visually represent the rhythm of the target audio, such that the expressivity of the audio playback interface for the target audio is enhanced.

In the method according to the embodiments of the present disclosure, in a case where the target audio switches to the playback state, the dissipation animation of the text content data is displayed in the audio playback interface, such that the display form of the text content data in the audio playback interface is enriched, and the efficiency of human-computer interaction is improved.

It should be noted that the apparatus for displaying the playback interface according to above embodiments is only illustrative by division of above functional modules. In practical application, above functions may be achieved by different functional modules according to needs, that is, an internal structure of the apparatus is divided into different functional modules to achieve all or part of functions described above. In addition, the apparatus for displaying the playback interface according to above embodiments and the embodiments of the method for displaying the playback interface belong to the same concept, and the specific implementation process is detailed in the method embodiments, which is not repeated herein.

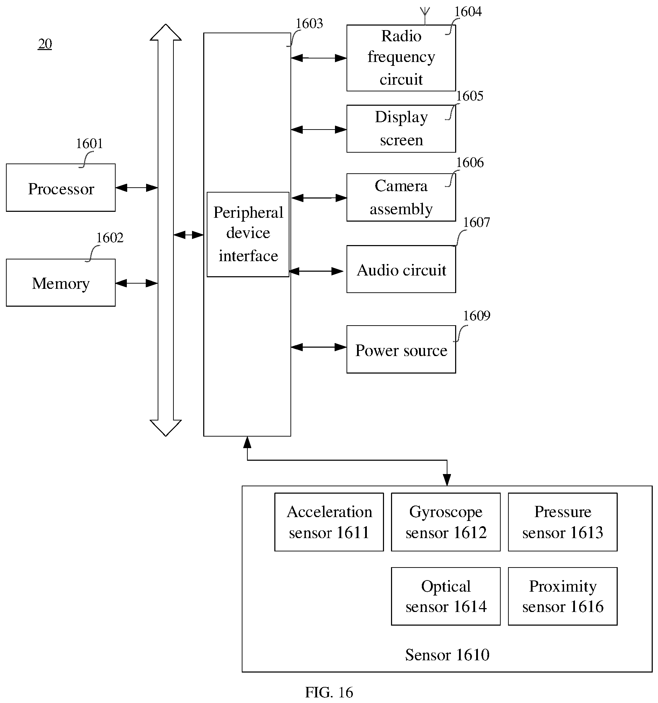

FIG. 16 is a schematic block diagram of a terminal according to some embodiments of the present disclosure. In some embodiments, the terminal is a smart phone, a tablet computer, a MP3, a MP4, a laptop, or a desktop computer. The terminal may also be referred to as a user equipment, a portable terminal, a laptop terminal, a desktop terminal, and other names, which is not limited in the present disclosure.

The terminal 20 may also be referred to as a user equipment, a portable terminal, a laptop terminal, a desktop terminal, and other names.

Generally, the terminal 20 may include a processor 1601 and a memory 1602.

In some embodiments, the processor 1601 includes one or more processing cores, for example, a four-core processor, an eight-core processor, or the like. In some embodiments, the processor 1601 is implemented by at least one hardware of a digital signal processor (DSP), a field-programmable gate array (FPGA), and a programmable logic array (PLA). In some embodiments, the processor 1601 further includes a primary processor and a secondary processor. The primary processor is a processor configured to process data in an active state, and is also referred to as a central processing unit (CPU). The secondary processor is a low-power consumption processor configured to process data in a standby state. In some embodiments, the processor 1601 is integrated with a graphics processing unit (GPU), and the GPU is configured to render and draw the content to be displayed on the display screen. In some embodiments, the processor 1601 further includes an AI processor configured to perform calculation operations related to machine learning.

In some embodiments, the memory 1602 includes one or more computer-readable storage medium, and the computer-readable storage medium is non-transitory. In some embodiments, the memory 1602 further includes a high-speed random-access memory, and a non-volatile memory, for example, one or more magnetic disk storage devices or flash storage devices. In some embodiments, the non-transitory computer-readable storage medium in the memory 1602 is configured to store one or more instructions, which when loaded and executed by the processor 1601, cause the processor 1601 to perform the method for displaying the hotspot graph according to the embodiments of the present disclosure.

In some embodiments, the terminal 20 further includes a peripheral device interface 1603 and at least one peripheral device. In some embodiments, the processor 1601, the memory 1602, and the peripheral device interface 1603 are connected to each other via a bus or a signal line. In some embodiments, the at least one peripheral device is connected to the peripheral device interface 1603 via a bus, a signal line, or a circuit board. Specifically, the peripheral device includes at least one of a radio frequency circuit 1604, a touch display screen 1605, a camera 1606, an audio circuit 1607, or a power source 1609.

The peripheral device interface 1603 is configured to connect the at least one peripheral device related to input/output (I/O) to the processor 1601 and the memory 1602. In some embodiments, the processor 1601, the memory 1602, and the peripheral device interface 1603 are integrated on the same chip or circuit board. In some embodiments, any one or two of the processor 1601, the memory 1602, and the peripheral device interface 1603 are achieved on a separate chip or circuit board, which is not limited in the embodiments of the present disclosure.

The radio frequency circuit 1604 is configured to receive and transmit a radio frequency (RF) signal, which is also referred to as an electromagnetic signal. The radio frequency circuit 1604 is communicated with a communication network or another communication device via the electromagnetic signal. The radio frequency circuit 1604 converts an electrical signal to an electromagnetic signal for transmission, or converts a received electromagnetic signal to an electrical signal. In some embodiments, the radio frequency circuit 1604 includes: an antenna system, an RF transceiver, one or more amplifiers, a tuner, an oscillator, a digital signal processor, a codec chip set, a user identification module card, or the like. In some embodiments, the radio frequency circuit 1604 is communicated with another terminal based on at least one wireless communication protocol. The wireless communication protocol includes, but is not limited to: a world wide web, a metropolitan area network, an intranet, various generations of mobile communication networks (2G, 3G, 4G and 5G), a wireless local area network and/or a wireless fidelity (Wi-Fi) network. In some embodiments, the radio frequency circuit 1604 further includes a near-field communication (NFC)-related circuits, which is not limited in the present disclosure.

The display screen 1605 is configured to display a user interface (UI). In some embodiments, the UE includes graphics, texts, icons, videos, and any combination thereof. In a case where the display screen 1605 is a touch display screen, the display screen 1605 further has the capability of acquiring a touch signal on or above the surface of the display screen 1605. In some embodiments, the touch signal acts as a control signal and is input to the processor 1601 for processing. In this case, the display screen 1605 is further configured to provide a virtual button and/or a virtual keyboard or keypad, which is also referred to as a soft button and/or a soft keyboard or keypad. In some embodiments, one display screen 1605 is provided, which is disposed on a front panel of the terminal 20. In some embodiments, at least two display screens 1605 are provided, which are respectively disposed on different surfaces of the terminal 20 or designed in a folded fashion. In some other embodiments, the display screen 1605 is a flexible display screen disposed on a bent surface or a folded surface of the terminal 20. Furthermore, the display screen 1605 is further disposed as an irregular pattern other than a rectangular, that is, a specially-shaped screen. In some embodiments, the display screen 1605 is fabricated from such materials as a liquid crystal display (LCD), an organic light-emitting diode (OLED), or the like.

The camera assembly 1606 is configured to capture an image or a video. In some embodiments, the camera assembly 1606 includes a front camera and/or a rear camera. Generally, the front camera is disposed on a front panel of the terminal, and the rear camera is disposed on a rear panel of the terminal.

The audio circuit 1607 includes a microphone and a speaker. The microphone is configured to capture an acoustic wave of a user and an environment, and convert the acoustic wave to an electrical signal and output the electrical signal to the processor 1601 for further processing, or input to the radio frequency circuit 1604 to achieve voice communication. For stereo capture or noise reduction, a plurality of such microphones are provided, which are disposed at different positions of the terminal 20. In some embodiments, the microphone is a microphone array or an omnidirectional capturing microphone. The speaker is configured to convert an electrical signal from the processor 1601 or the radio frequency circuit 1604 to an acoustic wave. In some embodiments, the speaker is a traditional thin-film speaker, or a piezoelectric ceramic speaker. In a case where the speaker is a piezoelectric ceramic speaker, the speaker converts an electrical signal to an acoustic wave audible by human beings, or converts an electrical signal to an acoustic wave inaudible by human beings for ranging or the like. In some embodiments, the audio circuit 1607 further includes a headphone plug.

The power source 1609 is configured to supply power for various assemblies in the terminal 20. In some embodiments, the power source 1609 is an alternating current, a direct current, a disposable battery, or a rechargeable battery. In a case where the power source 1609 includes a rechargeable battery, the rechargeable battery is a wired charging battery or a wireless charging battery.

In some embodiments, the terminal 20 further includes one or more sensors 1610. The one or more sensors 1610 include, but are not limited to: an acceleration sensor 1611, a gyroscope sensor 1612, a pressure sensor 1613, an optical sensor 1614, and a proximity sensor 1616.

In some embodiments, the acceleration sensor 1611 is configured to detect accelerations on three coordinate axes in a coordinate system established for the terminal 20.

In some embodiments, the gyroscope sensor 1612 is configured to detect a body direction and a rotation angle of the terminal 20, and the gyroscope sensor 1612 is collaborated with the acceleration sensor 1611 to capture a three-dimensional action performed by the user for the terminal 20. Based on the data acquired by the gyroscope sensor 1612, the processor 1601 achieves the following functions: action sensing (for example, modifying the UI based on an inclination operation of the user), image stabilization in photographing, game control, and inertial navigation.

In some embodiments, the pressure sensor 1613 is disposed on a side frame of the terminal 20 and/or on a lowermost layer of the display screen 1605. In a case where the pressure sensor 1613 is disposed on the side frame of the terminal 20, a grip signal of the user against the terminal 20 is detected, and the processor 1601 performs a left or right hand identification or performs a shortcut operation based on the grip signal acquired by the pressure sensor 1613. In a case where the pressure sensor 1613 is disposed on the lowermost layer of the display screen 1605, the processor 1601 controls an operable control on the UI based on a force operation of the user against the display screen 1605. The operable control includes at least one of a button control, a scroll bar control, an icon control, and a menu control.

The optical sensor 1614 is configured to acquire the intensity of ambient light. In some embodiments, the processor 1601 controls a display luminance of the display screen 1605 based on the intensity of ambient light acquired by the optical sensor 1614.

The proximity sensor 1615, also referred to as a distance sensor, is generally disposed on the front panel of the terminal 20. The proximity sensor 1615 is configured to acquire a distance between the user and the front face of the terminal 20.

Those skilled in the art may understand that the structure as illustrated in FIG. 16 does not construe a limitation on the terminal 20. The terminal 20 may include more or fewer assemblies over those illustrated in FIG. 8, or combinations of some components, or employ different component deployments.

In some embodiments, the computer-readable storage medium includes a read-only memory (ROM), a random-access memory (RAM), a solid state drives (SSD), an optical disc, or the like. The RAM includes a resistance RAM (ReRAM) and a dynamic RAM (DRAM). The serial numbers of the embodiments in the present disclosure are only for description only and do not represent the merits or demerits of the embodiments.

A person of ordinary skill in the art should understand that all or part of the processes in above embodiments are performed by hardware or by a program instructing the relevant hardware, and the program is stored in a computer-readable storage medium. The storage medium may be a ROM, a disk, an optical disc, and the like.

Described above are merely exemplary embodiments of the present disclosure, and are not intended to limit the present disclosure. Any modifications, equivalent replacements, improvements and the like made within the spirit and principles of the present disclosure should be encompassed within the scope of protection of the present disclosure.

## Claims

1. A method for displaying a playback interface, comprising:
displaying an audio playback interface, wherein the audio playback interface comprises a two-dimensional cover image corresponding to a target audio; and
displaying an animation in which a two-dimensional optical disc element corresponding to the target audio slides out from an edge of the two-dimensional cover image in a first designated direction in response to the target audio switching to a playback state.

2. The method according to claim 1, wherein displaying the animation in which the two-dimensional optical disc element corresponding to the target audio slides out from the edge of the two-dimensional cover image in the first designated direction in response to the target audio switching to the playback state comprises:
displaying a display animation in which the two-dimensional optical disc element corresponding to the target audio slides out from the edge of the two-dimensional cover image in response to the target audio switching to the playback state; and
stopping slide-out of the two-dimensional optical disc element in response to the two-dimensional optical disc element sliding to a designated position, and displaying a rotation animation of the two-dimensional optical disc element, wherein the rotation animation is used to represent that the target audio is in the playback state.

3. The method according to claim 2, wherein stopping the slide-out of the two-dimensional optical disc element in response to the two-dimensional optical disc element sliding to the designated position, and displaying the rotation animation of the two-dimensional optical disc element comprise:
stopping the slide-out of the two-dimensional optical disc element corresponding to the target audio in response to a center of circle of the two-dimensional optical disc element coinciding with the edge of the two-dimensional cover image, and displaying the rotation animation of the two-dimensional optical disc element corresponding to the target audio.

4. The method according to claim 2, wherein displaying the display animation in which the two-dimensional optical disc element corresponding to the target audio slides out from the edge of the two-dimensional cover image comprises:
displaying the display animation in which the two-dimensional optical disc element corresponding to the target audio slides out from the edge of the two-dimensional cover image at a predetermined speed curve, wherein the predetermined speed curve comprises a constant speed curve or a variable speed curve.

5. The method according to any one of claim 1 to 4, further comprising:
displaying an animation in which the two-dimensional optical disc element corresponding to the target audio slides in from the two-dimensional cover image in a second designated direction in response to the target audio switching from the playback state to a pause state.

6. The method according to claim 5, wherein displaying the animation in which the two-dimensional optical disc element corresponding to the target audio slides in from the two-dimensional cover image in the second designated direction in response to the target audio switching from the playback state to the pause state comprises:
stopping playing back a rotation animation of the two-dimensional optical disc element corresponding to the target audio in response to the target audio switching to the pause state, and displaying a display animation in which the two-dimensional optical disc element corresponding to the target audio slides in from the edge of the two-dimensional cover image.

7. The method according to any one of claims 1 to 4, further comprising:
receiving a slide operation on the two-dimensional optical disc element corresponding to the target audio in a playback process of the target audio; and
displaying a display animation in which the two-dimensional optical disc element corresponding to the target audio slides in from the edge of the two-dimensional cover image and a display animation in which a two-dimensional optical disc element corresponding to a candidate audio slides out from the edge of the two-dimensional cover image based on the slide operation, wherein the candidate audio is used to indicate an audio with a playback sequence subsequent to the target audio.

8. The method according to any one of claims 1 to 4, further comprising:
displaying a spectrum animation corresponding to the target audio in a playback process of the target audio.

9. The method according to any one of claims 1 to 4, wherein the audio playback interface comprises a playback background, and the method further comprises:
acquiring a scale-up parameter of the target audio to a current playback frame in response to the target audio switching to the playback state, wherein the scale-up parameter is used to indicate a maximum inter-frame frequency of a sound wave of the target audio; and
displaying a scale animation of the playback background on the audio playback interface in a case where the scale-up parameter of the target audio to the current playback frame is greater than a predetermined threshold.

10. The method according to any one of claims 1 to 4, wherein the audio playback interface comprises a text display region used to display text content data corresponding to the target audio, and the method further comprises:
displaying corresponding m rows of text content data in the text content data in the text display region based on a playback progress of the target audio in response to the target audio switching to the playback state, wherein m is a positive integer, and a word display format corresponding to the m rows of text content data dynamically changes with the playback progress of the target audio, wherein the word display format comprises at least one of a word color, a word size, a word texture, or a word transparency; and
displaying a dissipation animation corresponding to an i^{th} row of text content data in response to an end of playback of an audio frame corresponding to the i^{th} row of text content data.

11. The method according to any one of claims 1 to 4, further comprising:
acquiring image information of the target audio, wherein the image information is used to indicate an image associated with the target audio; and
determining a display effect of the two-dimensional optical disc element corresponding to the target audio based on the image information, wherein the display effect comprises at least one of a display image, a display color, or a display texture.

12. An apparatus for displaying a playback interface, comprising:
a displaying module, configured to display an audio playback interface, wherein the audio playback interface comprises a two-dimensional cover image corresponding to a target audio; and
the displaying module, further configured to display an animation in which a two-dimensional optical disc element corresponding to the target audio slides out from an edge of the two-dimensional cover image in a first designated direction in response to the target audio switching to a playback state.

13. A computer device, comprising: a processor, and a memory storing one or more programs, which when loaded and run by the processor, cause the processor to perform the method for displaying the playback interface as defined in any one of claims 1 to 11.

14. A computer-readable storage medium, storing one or more programs, which when loaded and run by a processor, cause the processor to perform the method for displaying the playback interface as defined in any one of claims 1 to 11.
